(19) Europäisches Patentamt
European Patent Office
Office européen des brevets

(11) **EP 3 422 873 B1**

(12) **EUROPEAN PATENT SPECIFICATION**

(45) Date of publication and mention of the grant of the patent:
**31.01.2024 Bulletin 2024/05**

(21) Application number: **17760611.8**

(22) Date of filing: **28.02.2017**

(51) International Patent Classification (IPC):
***A23L 27/30*** *(2016.01)* ***A23L 27/10*** *(2016.01)*
***A23G 4/06*** *(2006.01)* ***A23G 4/10*** *(2006.01)*
***A23G 4/14*** *(2006.01)* ***A23L 27/00*** *(2016.01)*

(52) Cooperative Patent Classification (CPC):
(C-Sets available)
**A23L 27/72; A23G 4/06; A23L 27/36; A23L 27/70;**
A23V 2002/00 (Cont.)

(86) International application number:
**PCT/US2017/019952**

(87) International publication number:
**WO 2017/151616 (08.09.2017 Gazette 2017/36)**

(54) **LONG-LASTING SWEETENER FORMULATIONS**

LANGANHALTENDE SÜSSSTOFFFORMULIERUNGEN

PRÉPARATIONS D’ÉDULCORANT DE LONGUE DURÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.03.2016 US 201662301976 P**

(43) Date of publication of application:
**09.01.2019 Bulletin 2019/02**

(73) Proprietor: **Wm. Wrigley Jr. Company**
**Chicago, IL 60642 (US)**

(72) Inventors:
- **MO, Xiaoqun**
  **Chicago, IL 60642 (US)**
- **HSU, April**
  **Chicago, IL 60642 (US)**
- **BARKALOW, David, G.**
  **Chicago, IL 60642 (US)**

(74) Representative: **Haseltine Lake Kempner LLP**
**One Portwall Square**
**Portwall Lane**
**Bristol BS1 6BH (GB)**

(56) References cited:
**WO-A1-2015/023928** **WO-A2-91/03147**
**US-A1- 2012 058 236** **US-A1- 2014 329 281**
**US-A1- 2014 342 043** **US-A1- 2015 086 695**
**US-A1- 2015 320 101**

- **INDRA PRAKASH ET AL: "Development of Next Generation Stevia Sweetener: Rebaudioside M", FOODS, vol. 3, no. 1, 27 February 2014 (2014-02-27), pages 162-175, XP055309887, DOI: 10.3390/foods3010162**

EP 3 422 873 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
A23V 2002/00, A23V 2200/224, A23V 2250/258

## Description

## FIELD

The presently disclosed subject matter relates to confectionery products comprising long-lasting sweetener formulations. Specifically, the present disclosure is directed to a confectionery comprising compositions that include one or more sweetener compounds. The compositions can include combinations of compounds that can be used to enhance a sweetening attribute, such as duration of sweetness without increasing bitterness.

## BACKGROUND

Steviol glycosides are the precursors of many natural high potency sweeteners. The glycosides are extracted from the leaves of the *stevia rebaudiana* plant. The leaves of *Stevia rebaudiana* Bertoni have been used by the natives of Paraguay to sweeten beverages for centuries. The plant is the source of a number of sweet ent-kaurene diterpenoid glycosides.

Identified steviol glycosides include stevioside, steviolbioside, rubusoside, rebaudioside A, rebaudioside B, rebaudioside C, rebaudioside D, rebaudioside E, rebaudioside F, rebaudioside M and dulcoside A. Each steviol glycosides is present in the plant in different concentrations and possesses a different sweetening power and taste. Stevioside and Rebaudioside A are the most prevalent of the glycosides. Rebaudioside A in particular is described as 200 times sweeter than sugar. Steviol glycosides, unlike regular sugar, do not impact blood sugar when consumed. Accordingly, these compounds have found popularity as low carbohydrate alternatives and sugar substitutes in confectionery products such as chewing gum. These high potency sweeteners do not add calories to the final product or cause tooth decay.

However, rebaudioside A often exhibits an increased perception of bitterness due to the quick release from chewing gum during mastication. This increase in bitterness can be linked to a quicker decrease in sweetness. Therefore, there is a need to delay the release of steviol glycosides from confectionery products to improve the sweetness duration of gum while also reducing the perceived bitterness. The presently disclosed subject matter addresses this problem. WO9103147A2 provides a method for producing a chewing gum with a delayed release stevioside sweetener, as well as the chewing gum so produced; Indra Prakesh et al, "Development of Next Generation Stevia Sweetener: Rebaudioside M", Foods, 2014, 3(1), 162-175 relates to rebaudioside M as a natural non-caloric potential sweetener in food and beverage products; WO2015023928A1 provides sweetener compositions including at least 3% Rebaudioside N by weight based on the total weight of sweetener compounds in the sweetener composition; and US2015086695 provides for sweetener compositions, beverages, methods of making the sweetener compositions, methods of using the sweetener compositions, and the like.

## SUMMARY OF THE INVENTION

The presently disclosed subject matter is directed to a confectionery comprising a sweetener composition comprising at least one encapsulated compound wherein the at least one encapsulated compound is selected from the group consisting of rebaudioside A, rebaudioside D, rebaudioside M, and combinations thereof, and wherein the encapsulating material of the at least one encapsulated compound is selected from the group consisting of hydroxyl methyl cellulose, hydroxypropyl methylcellulose (HPMC), microcrystalline cellulose, carboxymethyl cellulose, ethylcellulose, and combinations thereof, wherein the confectionery is a chewing gum or a chewy confection, and wherein the sweetener composition is added to provide an amount from 0.2 to 0.4 wt% of rebaudioside A, rebaudioside D, rebaudioside M and combinations thereof in the chewing gum or chewy confection..

In certain embodiments, the at least one encapsulated compound is partially encapsulated.

In other embodiments, the encapsulating material of the at least one encapsulated compound is selected from the group consisting of hydroxypropyl methylcellulose (HPMC), ethylcellulose and combinations thereof.

In certain embodiments, the composition further comprises a non-nutritive sweetener selected from the group consisting of aspartame, neotame, advantame, sucralose, acesulfame potassium (Acek), sodium saccharin, glycyrrhizin, Neohysperidine Dihydrochalcone (NHDC), Neotame, Lou Han Guo, brazzein, monatin, thaumatin, alitame, saccharin and its salts, cyclamic acid and its salts, monellin, and combinations thereof.

The presently disclosed subject matter is a confectionery comprising the sweetener composition, wherein the confectionery is chewing gum or a chewy confection. In certain embodiments, the sweetener composition is present in the chewing gum, or chewy confection in an amount of from about 0.001 to about 10wt% or from about 0.01 to about 5wt%.

The foregoing has outlined broadly the features and technical advantages of the present application in order that the detailed description that follows may be better understood. Additional features and advantages of the application will be described hereinafter which form the subject of the claims of the application. It should be appreciated by those skilled in the art that the conception and specific embodiment disclosed may be readily utilized as a basis for modifying

or designing other structures for carrying out the same purposes of the present application. It should also be realized by those skilled in the art that such equivalent constructions do not depart from the scope of the application as set forth in the appended claims. The novel features which are believed to be characteristic of the application, both as to its organization and method of operation, together with further objects and advantages will be better understood from the following description.

## BRIEF DESCRIPTION OF THE DRAWINGS

**Figures 1a** - **1f** provide graphical representations of attributes of specific compounds alone or in combination as provided in the disclosed subject matter. Specifically, Figure 1a depicts the sweetness intensity against time of Reb A and encapsulated Reb A. Figure 1b depicts the sweetness intensity over time of Reb D and encapsulated Reb D. Figure 1c depicts the sweetness intensity of a blend of Reb A and Reb D and the encapsulated blend. Figure 1d depicts the sweetness intensity of sucralose and encapsulated sucralose. Figure 1e depicts the sweetness intensity of Reb D, encapsulated Reb D, Reb A, and encapsulated Reb A. Figure 1f depicts the sweetness intensity of a blend of Reb A and Reb D, the encapsulated blend, Reb A and encapsulated Reb A. In each graphic, time is provided in minutes (x-axis), and the attribute is evaluated on a 10-point scale, with 0 being the lowest and 10 being the highest (y-axis).

**Figures 2a** - **2f** provide graphical representations of attributes of specific compounds alone or in combination as provided in the disclosed subject matter. Specifically, Figure 2a depicts the bitterness intensity against time of Reb A, encapsulated Reb A, Reb D and encapsulated Reb D. Figure 2b depicts the bitterness intensity over time of Reb D, encapsulated Reb D, a blend of Reb A and Reb D and the encapsulated blend. Figure 2c depicts bitterness intensity of Reb A and encapsulated Reb A. Figure 2d depicts bitterness intensity of Reb D and encapsulated Reb D. Figure 2e depicts bitterness intensity of a blend of Reb A and Reb D and the encapsulated blend. Figure 2f depicts bitterness intensity of sucralose and encapsulated sucralose. In each graphic, time is provided in minutes (x-axis), and the attribute is evaluated on a 10-point scale, with 0 being the lowest and 10 being the highest (y-axis).

**Figures 3a** - **3b** provide graphical representations of different attributes of specific sweetener compounds. Specifically, Figure 3a depicts the sweetness intensity against time of encapsulated Reb A and Reb A. Figure 3b depicts the metallic intensity against time of Reb A and encapsulated Reb A. In each graphic, time is provided in minutes (x-axis), and the attribute is evaluated on a 15-point scale, with 0 being the lowest and 15 being the highest (y-axis).

**Figures 4a** - **4c** provide graphical representations of different attributes of specific sweetener compounds. Specifically, Figure 4a depicts the sweetness intensity against time of an encapsulated blend of Reb A and Reb D, encapsulated Reb D and encapsulated Reb A. Figure 4b depicts the metallic intensity against time of an encapsulated blend of Reb A and Reb D, encapsulated Reb D and encapsulated Reb A. Figure 4c depicts the bitterness intensity against time of an encapsulated blend of Reb A and Reb D, encapsulated Reb D and encapsulated Reb A. In each graphic, time is provided in minutes (x-axis), and the attribute is evaluated on a 15-point scale, with 0 being the lowest and 15 being the highest (y-axis).

Figure 5 provides graphical representation of different attributes of specific sweetener compounds formulated in chewing gum. Figure 5 depicts the metallic intensity of Reb A, Reb A encapsulation 1 and Reb A encapsulation 2. In each graphic, time is provided in minutes (x-axis), and the attribute is evaluated on a 15-point scale, with 0 being the lowest and 15 being the highest (y-axis).

Figures 6a-6d provide graphical representations of different attributes of specific sweetener compounds formulated in chewing gum. Specifically, Figure 6a depicts the bitterness intensity against time of neat Reb M, neat Reb A and a 1:1 neat blend of Reb M and Reb A. Figure 6b depicts the bitterness intensity against time of neat Reb M, neat Reb A and a 1:3 neat blend of Reb M and Reb A. Figure 6c depicts the bitterness intensity over time of encapsulated Reb M, encapsulated Reb-A, and an encapsulated blend of Reb M and Reb A in a 1:1 ratio. Figure 6d depicts the bitterness intensity over time of encapsulated Reb M, encapsulated Reb-A, and an encapsulated blend of Reb M and Reb A in a 3:1 ratio. In each graphic, time is provided in minutes (x-axis), and the attribute is evaluated on a 10-point scale, with 0 being the lowest and 9 being the highest (y-axis).

Figures 7a-7d provide graphical representations of different attributes of specific sweetener compounds formulated in chewing gum. Specifically, Figure 7a depicts the sweetness intensity against time of neat Reb M, neat Reb A and a 1:1 neat blend of Reb M and Reb A. Figure 7b depicts the sweetness intensity against time of neat Reb M, neat Reb A and a 1:3 neat blend of Reb M and Reb A. Figure 7c depicts the sweetness intensity over time of encapsulated Reb M, encapsulated Reb-A, and an encapsulated blend of Reb M and Reb A in a 1:1 ratio. Figure 7d depicts the sweetness intensity over time of encapsulated Reb M, encapsulated Reb-A, and an encapsulated blend of Reb M and Reb A in a 3:1 ratio. In each graphic, time is provided in minutes (x-axis), and the attribute is evaluated on a 10-point scale, with 0 being the lowest and 9 being the highest (y-axis).

## DETAILED DESCRIPTION

As noted above, to date, there remains a need in the art for compositions that provide long-lasting sweetening attributes to various confectionery products. The presently disclosed subject matter addresses this need through the use of one or more sweetener compounds that provide prolonged sweetness without an increase in bitterness.

### 1. Definitions

The terms used in this specification generally have their ordinary meanings in the art, within the context of this disclosed subject matter and in the specific context where each term is used. Certain terms are discussed below, or elsewhere in the specification, to provide additional guidance to the practitioner in describing the compositions and methods of the disclosed subject matter and how to make and use them.

As used herein, the use of the word "a" or "an" when used in conjunction with the term "comprising" in the claims and/or the specification may mean "one," but it is also consistent with the meaning of "one or more," "at least one," and "one or more than one." Still further, the terms "having," "including," "containing" and "comprising" are interchangeable and one of skill in the art is cognizant that these terms are open ended terms.

The term "about" or "approximately" means within an acceptable error range for the particular value as determined by one of ordinary skill in the art, which will depend in part on how the value is measured or determined, i.e., the limitations of the measurement system. For example, "about" can mean within 3 or more than 3 standard deviations, per the practice in the art. Alternatively, "about" can mean a range of up to 20%, preferably up to 10%, more preferably up to 5%, and more preferably still up to 1% of a given value.

As used herein, "ppm" means parts-per-million and is a weight relative parameter. A part-per-million is a microgram per gram, such that a component that is present at 10 ppm is present at 10 micrograms of the specific component per 1 gram of the aggregate mixture.

All percentages, parts and ratios as used herein, are by weight of the total composition, unless otherwise specified.

As used herein "admixing," refers to the process where the sweetener formulation is mixed with or added to the completed product or mixed with some or all of the components of the product during product formation or some combination of these steps. When used in the context of admixing, the term "product" refers to the product or any of its components. This admixing step can include a process selected from the step of adding the sweetener formulation to the product, spraying the sweetener formulation on the product, coating the sweetener formulation on the product, suspending the sweetener formulation in the product, painting the sweetener formulation on the product, pasting the sweetener formulation on the product, encapsulating the product with the sweetener formulation, mixing the sweetener formulation with the product and any combination thereof. The sweetener formulation can be a liquid, dry powder, spray, paste, suspension and any combination thereof.

As used herein, the term "chewing gum" refers to a flavored substance intended for chewing. The term as used herein also includes bubble gum and confectionery products containing chewing gum. In certain embodiments, chewing gum forms include, but are not limited to, tablets, sticks, solid balls, hollow balls, cut and wrap, and pellets or pillows. As used herein, chewing gum base contains a gum non-filler base portion and a gum base filler portion.

### 2. Sweetener Formulations

The present invention comprises sweetener formulations that include at least one, two, three, or more sweetener compounds. In certain embodiments, the sweetener formulations can be used to increase the longevity of a sweetening attribute of an edible composition, such as chewing gum. In further embodiments, the sweetener formulations provide a long-lasting sweetening sensory attribute without increasing a bitter taste or metallic taste in the chewing gum composition. The sweetener formulation is encapsulated.

The sweetener formulation comprises at least one steviol glycoside. These glycosides are extracted from the *stevia rebaudiana* plant. The plant is the source of a number of sweet *ent*-kaurene diterpenoid glycosides represented generally by the following structure:

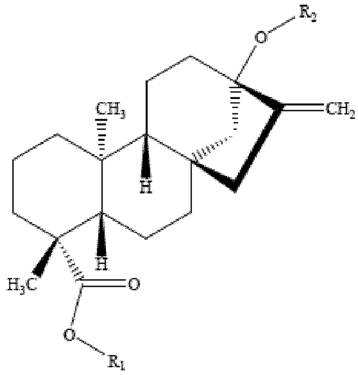

The sweetener formulation comprises rebaudioside A, rebaudioside D, rebaudioside M, or combinations thereof. In other embodiments, the glycosides employed have a purity of at least about 85%, at least about 90%, or at least about 95%. The molecular weight and identification of each substituent R- group of each of these steviol glycosides is described in Table 1 below:

Table 1.

| Sweetener | R-Groups in Backbone Figure Above | | Formula | Molecular Weight (g/mol) |
|---|---|---|---|---|
| | $R_1$ | $R_2$ | | |
| Rebaudioside A | β-glc- | (β-glc)$_2$-β-glc- | $C_{44}H_{70}O_{13}$ | 967.01 |
| Rebaudioside B | H | (β-glc)$_2$-β-glc- | $C_{38}H_{60}O_{18}$ | 804.88 |
| Rebaudioside C | β-glc- | (β-glc, α-rha-)-β-glc- | $C_{44}H_{70}O_{22}$ | 951.01 |
| Rebaudioside D | β-glc-β-glc- | (β-glc)$_2$-β-glc- | $C_{50}H_{80}O_{28}$ | 1129.15 |
| Rebaudioside E | β-glc-β-glc- | β-glc-β-glc- | $C_{44}H_{70}O_{23}$ | 967.01 |
| Rebaudioside F | β-glc- | (β-glc, β-xyl)-β-glc- | $C_{43}H_{68}O_{22}$ | 936.99 |
| Rebaudioside M | (β-glc)$_2$-β-glc | (β-glc)$_2$-β-glc- | $C_{56}H_{90}O_{33}$ | 1291.3 |
| Stevioside | β-glc- | β-glc-β-glc- | $C_{38}H_{60}O_{18}$ | 804.88 |
| Steviolbioside | H | β-glc-β-glc- | $C_{32}H_{50}O_{13}$ | 642.73 |
| Ruvustaside | β-glc- | β-glc- | $C_{32}H_{50}O_{13}$ | 642.73 |
| Dulcoside A | β-glc- | α-rha-β-glc- | $C_{38}H_{60}O_{17}$ | 788.87 |
| glc = glucose; rha = rhamnose; xyl = xylose | | | | |

Table 1 is disclosed in I. Prakash et al., C. Foods. 3, 163, 162-175 (2014).

In certain non-limiting embodiments, the sweetener formulation comprises the compound rebaudioside A (Reb A), having the following structure.

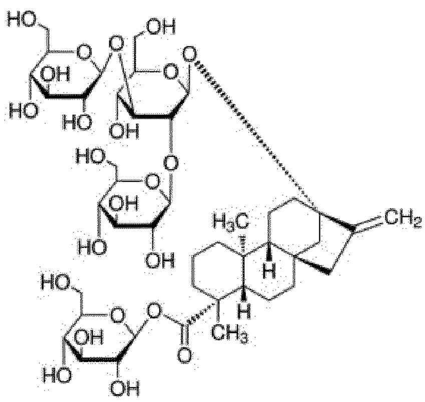

Reb A, Mw 967.01

In certain non-limiting embodiments, the sweetener formulation comprises the compound rebaudioside D (Reb D), having the following structure.

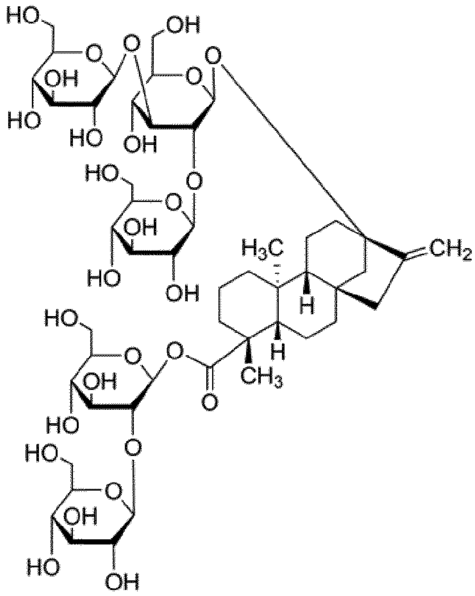

Reb D, Mw 1129.15

In one non-limiting embodiment, the sweetener formulation comprises Reb A, Reb D, or combinations thereof.

Reb A and Reb D are steviol glycosides obtained by extraction from the *stevia rebaudiana* plant. Methods of extraction and purification of Reb D known in the art include those disclosed in U.S. Patent No. 9,029,426, U.S. Patent No. 8,299,224 and U.S. Patent No. 8,703,224.

In yet other non-limiting embodiments, the sweetener formulations can further comprise one, two, three, four, five or more sweetener compounds, for example, aspartame, neotame, advantame, sucralose, acesulfame potassium (Acek), sodium saccharin, glycyrrhizin, neohysperidine dihydrochalcone (NHDC), lou han guo, brazzein, monatin, thaumatin, alitame, saccharin and its salts, cyclamic acid and its salts, monellin and combinations thereof.

The sweetener formulation comprises at least one steviol glycoside. In certain embodiments, the formulation comprises from about 1 to about 99 steviol glycoside wt%, about 10 to about 80wt%, about 30 to about 70 wt%, or about 40 to about 50 wt% steviol glycoside.

In certain embodiments, the sweetener formulation comprises Reb A. In certain embodiments, the formulation comprises from about 1 to about 99wt% Reb A, about 5 to about 85wt%, about 35 to about 70wt%, about 40 to about 50wt%, about 35wt%, about 40wt%, about 42.5wt%, about 50wt% or about 85wt%. In certain embodiments, the sweetener formulation comprises Reb D. In certain embodiments, the formulation comprises from about 1 to about 99wt% Reb D, about 5 to about 85wt%, about 35 to about 70wt%, about 40 to about 50wt%, about 35wt%, about 42.5wt%, about 50wt% or about 85wt%.

In certain embodiments, the sweetener formulation can include a blend of steviol glycosides. In certain embodiments, the sweetener formulation can include a blend of Reb A and Reb D. In certain embodiments, Reb A and Reb D are present in a ratio of about 5:1, about 2:1, about 3:1, about 1:1, about 1:2, 1:3, or about 1:5.

In other embodiments, the sweetener formulation can include a blend of Reb M and Reb A. In certain embodiments, the Reb M and Reb A are present in a ratio of about 1:1, about 1:3, or about 1:5, 3:1, 5:1. The sweetener formulation can include partially encapsulated Reb M, Reb A, or combinations thereof.

In another embodiment, the sweetener formulation can include a blend of Reb M and Reb D. In certain embodiments, the Reb M and Reb D are present in a ratio of about 1:1, about 1:3, or about 1:5, 3:1, 5:1. The sweetener formulation can include partially encapsulated Reb M, Reb D, or combinations thereof.

The sweetener formulation includes encapsulated Reb A, Reb D, Reb M, or combinations thereof. In certain embodiments, a sweetener formulation can include partially encapsulated Reb A, Reb D, Reb M, or combinations thereof.

### 3. Methods of Encapsulation

Sweetener compounds generally release quickly from chewing gum during mastication. In certain embodiments, the chewing gum formation process can include modification of one or more sweetener compounds by encapsulation or agglomeration before addition to the chewing gum formulation to delay the release of sweetener.

In other embodiments, sweetener compounds may be coated by an encapsulating agent applied by spray drying, fluid bed coating, fiber spinning or coacervation techniques, agglomeration, and fixation or entrapment/absorption, extrusion, plus additional encapsulation or agglomeration.

In certain embodiments, encapsulation modifies the release of sweetener formulations from the chewing gum by modifying the solubility or dissolution rate. Any standard technique which gives partial or full encapsulation of the combination of sweetener formulations can be used. In certain embodiments of the presently disclosed subject matter, encapsulation techniques include, but are not limited to, spray drying, fiber spinning, agglomeration, spray chilling, fluidbed coating, extrusion, fixation or entrapment/absorption and coacervation. In certain embodiments, encapsulation techniques that give partial encapsulation or full encapsulation can be used.

Encapsulating materials include hydroxyl methyl cellulose, hydroxypropyl methylcellulose (HPMC), microcrystalline cellulose, carboxymethyl cellulose, ethylcellulose.

Suitable encapsulating materials, which are not part of the invention but are described for reference only, include, but are not limited to, water-soluble sugar or sugar alcohol such as sorbitol, isomalt, dextrose, erythritol, lactitol, maltitol, mannitol, xylitol, hydrogenated corn syrup and mixtures thereof.

Suitable encapsulants for use in delayed release of sweetener compounds, which are not part of the invention but are described for reference only, include, but are not limited to, polyvinyl acetate, polyethylene, crosslinked polyvinyl pyrrolidone, polymethylmethacrylate, polyacetic acid, polyhydroxyalkanoates, ethylcellulose, polyvinylacetate phthalate, methacrylic acid-co-methylmethacrylate and combinations thereof.

In other embodiments, encapsulants for use in delayed release embodiments which are not part of the invention but are described for reference only include, but are not limited to, polysacharrides and modified polysaccharides. Suitable polysaccharides can be sourced from botanical, algal, microbial and animals. Non-limiting examples of botanical derived polysaccharides include cellulose; tree gum extrudates such as gum arabic, gum karaya, gum ghatti, gum tragacanth and mesquite gum; plant derived polysaccharides such as pectin, arabinoxylan, xyloglucan, arabinogalactan, xylan, arabinan, and cellulose; seed derived polysaccharides such as guar gum, locust bean gum, tara gum, tamarind gum, xyloglucan, arabinoxylan and cereal β-glucan; and tuber derived gum such as konjac mannan. Non-limiting examples of algal derived polysaccharides include agar, carrageenan, furcellaran and alginate. Non-limiting examples of microbial fermentation product polysaccharides include xanthan gum, curdlan, dextran, gellan gum, pullulan, scleroglucan, alternan, elsinan and levan. Non-limiting examples of polysaccharides from animal sources include chitin and chitosan. Non-limiting examples of modified polysacharrides include substituted starch (starch acetate, octenyl succinyl starch), methyl cellulose. Other suitable encapsulants for use in delayed release embodiments which are not part of the invention but are described for reference only include, but are not limited to, proteins such as gelatin, zein, casein, soybean proteins, pea protein, whey protein and combinations thereof.

In certain embodiments, the coating compositions can be susceptible to water permeation to various degrees. In certain embodiments, the coating composition is a food grade material.

In one non-limiting example, encapsulation can be performed as follows: mixing an encapsulating material (for example, a polysaccharide) and sweetener with deionized water, and mixing until cohesive. The solidified mixture can then be broken up, dried and ground to a specific particle size. The encapsulated sweetener formulations can then be added to a typical chewing gum.

In certain embodiments, the encapsulated sweetener formulations can be combined with a non-encapsulated sweetener formulations before additional to a chewing gum composition.

In certain embodiments, encapsulating material is present in the sweetener formulation in an amount from about 1 to about 90% w/w, from about 5 to about 80% w/w, from about 15 to about 70% w/w, from about 30 to about 50% w/w, about 15% w/w, about 30% w/w, about 50% w/w, or about 60% w/w.

In certain embodiments, the encapsulating material on the sweetener formulations controls the length of time and the amount of release from chewing gum. In certain embodiments, up to about 10%, up to about 15%, up to about 20%, or up to about 25% of the sweetener formulations are released from the chewing gum during mastication. In certain embodiments, at least 20%, at least 25%, or at least 30%, of the sweetener formulations are released from the chewing gum during mastication.

In certain embodiments, the encapsulant can be a minimum of about 1%, a minimum of about 15%, a minimum of about 30%, a minimum of about 40%, a minimum of about 50%, a minimum of about 60% by weight of the coated sweetener formulations.

The sweetener formulation is added to provide from about 0.2 to 0.4wt% of rebaudioside A, rebaudioside D, rebaudioside M, or a combination thereof to a chewing gum or chewy confectionary for a clean, sweet taste. Preferably,

the chewing gum or chewy confections contains up to 0.2wt% Reb A, up to 0.4wt% Reb M, and combinations thereof.

### 4. Chewing Gum

The long-lasting sweetener formulations of the presently disclosed subject matter are incorporated into confectioneries such as chewy candies and chewing gum.

The presently disclosed subject matter can be incorporated into chewing gum using conventional procedures and equipment and suitable additional components known in the art, for example, as described by U.S. Publication Nos. 2013/0156885 and U.S. 2005/0202118.

In certain embodiments, encapsulated sweetener compounds can be mixed and added to flavor, and then added to the gum mixture.

A chewing gum center composition or other chewing gum compositions can contain a chewable gum base portion, which is essentially free of water and is water-insoluble, a water-soluble bulk portion and flavors which can be water insoluble. The water-soluble portion can dissipate with a portion of the flavor over a period of time during chewing. The gum base portion is retained in the mouth throughout the chew.

In certain embodiments, the insoluble gum base comprises elastomers, elastomer solvents, plasticizers, waxes, emulsifiers and/or inorganic fillers. In certain embodiments, the insoluble gum base can comprise elastomers, elastomer solvents, plasticizers, waxes, emulsifiers and/or inorganic fillers. Plastic polymers, such as polyvinyl acetate, which can behave as plasticizers, can also be included. In certain embodiments, plastic polymers can include but are not limited to, polyvinyl laureate, polyvinyl alcohol and polyvinyl pyrrolidone. Non-limiting examples of elastomers can include polyisobutylene, butyl rubber, (isobutylene-isoprene copolymer) and styrene butadiene rubber, as well as natural latexes such as chicle. In certain embodiments, elastomer solvents can include resins such as terpene resins. In certain embodiments, the plasticizers are fats and oils, including but not limited to, tallow, hydrogenated and partially hydrogenated vegetable oils, and cocoa butter. In certain embodiments, the waxes include, but are not limited to, paraffin, microcrystalline and natural waxes such as beeswax and carnauba.

In certain embodiments, the chewing gum further contains one or more flavor components that are derived from artificial or natural sources or combinations thereof.

In certain embodiments, the chewing gum further contains one more coloring agents. In certain embodiments, the coloring agents can be food quality dyes.

In certain embodiments, the insoluble gum base constitutes from about 5% to about 95% by weight of the gum. In certain embodiments, the insoluble gum base comprises from about 10% and about 50% by weight of the gum or from about 20% to about 35% by weight of the gum.

In certain embodiments, the sweetener formulation can be added to the chewing gum formula in an amount such that it will contain from about 0.001 to about 10 wt% sweetener formulation, from about 0.01 to about 5wt% sweetener formulation, from about 0.25 to about 2.0wt% sweetener formulation, about 0.2wt% , about 0.2875wt%, about 0.1 wt% sweetener formulation, about 0. 15wt% sweetener formulation, about 0.2wt% sweetener formulation, about 0.235wt% sweetener formulation, or about 0.5wt% sweetener formulation. In certain embodiments, the long-lasting sweetener formulations comprising encapsulated sweetener compounds are effective to enhance a sweetening sensory attribute. Affected sensory attributes include, but are not limited to, sweetness, metallic taste, astringency and bitterness. In certain embodiments, sweetness is enhanced without increasing metallic taste, bitterness, and/or astringency. In some embodiments, sweetness is sensed for a longer period of chew as compared to a chewing gum which does not comprise encapsulated sweetener compounds. In some embodiments, sweetness is sensed for a longer period of chew as compared to a chewing gum which does not comprise encapsulated sweetener compounds, without an increase in bitterness over the same period of chew.

## EXAMPLES

The presently disclosed subject matter will be better understood by reference to the following Examples, which are provided as exemplary of the disclosed subject matter, and not by way of limitation.

### Example 1: Encapsulated sweeteners

In this Example, different sweetener formulations were encapsulated by agglomeration.

Modified cellulose encapsulated sweeteners were prepared by first mixing HPMC with individual high potency sweeteners or mixing with pre-blended Reb A and Reb D. About 40g of water was slowly pipetted into mixture. The mixture was combined until it became cohesive (similar to the preparation of bread dough). The mass was broken into small pieces and dried at 80°C overnight. The pieces were then ground using hammer mill. The composition of each sweetener formulation is summarized in Table 2.

Table 2. Percentage by weight.

| Description | Encapsulated Reb A | Encapsulated Reb D | Encapsulated Reb A+D | Encapsulated sucralose† |
|---|---|---|---|---|
| Reb D | - | 85 | 42.5 | - |
| Reb A | 85 | - | 42.5 | - |
| Sucralose | - | - | - | 85 |
| HPMC | 15 | 15 | 15 | 15 |
| Total | 100 | 100 | 100 | 100 |
| † = denotes a Reference Example which is not part of the invention | | | | |

**Example 2: Chewing gum formulations**

In this example, the encapsulated sweeteners from Table 2 above were incorporated into chewing gum formulations and evaluated for sensory attributes including sweetness and bitterness.

Eight chewing gum formulations were prepared by standard mixing procedures known in the art. The chewing gum formulations are summarized in Table 3.

Table 3.

| FORMULA | 2A† | 2B | 2C† | 2D | 2E† | 2F† | 2G | 2H† |
|---|---|---|---|---|---|---|---|---|
| sorbitol | 55.85 | 55.81 | 55.85 | 55.81 | 56.05 | 56.05 | 56.05 | 55.85 |
| gum base | 25.72 | 25.72 | 25.72 | 25.72 | 25.72 | 25.72 | 25.72 | 25.72 |
| glycerine | 16.25 | 16.2500 | 16.25 | 16.25 | 16.25 | 16.25 | 16.25 | 16.25 |
| flavor | 1.86 | 1.86 | 1.86 | 1.86 | 1.86 | 1.86 | 1.86 | 1.86 |
| lecithin | 0.13 | 0.13 | 0.13 | 0.13 | 0.13 | 0.13 | 0.13 | 0.13 |
| Reb D | 0.20 | - | 0.10 | - | - | - | - | - |
| encapsulated Reb D | - | 0.235 | - | - | - | - | - | - |
| Reb A | - | - | 0.10 | - | - | - | - | 0.2 |
| encapsulated Reb A+D | - | - | - | 0.235 | - | - | - | - |
| sucralo se | - | - | - | - | 0.20 | - | - | - |
| encapsulated sucralose | - | - | - | - | - | 0.235 | - | - |
| encapsulated Reb A | - | - | - | - | - | - | 0.235 | - |
| Total | 100.00 | 100.00 | 100.00 | 100.00 | 100.00 | 100.00 | 100.00 | 100.00 |
| † = denotes a Reference Example which is not part of the invention | | | | | | | | |

Each formulation was tested by sensory panelists (N=6) on a 10 point scale. Each sample was chewed for ten minutes and evaluated for sweetness and bitterness intensity at 0.5, 1, 2, 3, 4, 6, 9, and 10 minutes.

The results for sweetness and bitterness are summarized in Figures 1 and 2. The encapsulation decreased bitterness.

**Example 3: Encapsulated sweeteners and chewing gum formulations**

In this example, HPMC encapsulated sweeteners were incorporated into chewing gum formulations and evaluated by sensory panelists.

The composition of encapsulated sweeteners 3A, 3B and 3C are summarized in Table 4. The sweeteners were prepared by the methods disclosed in Example 1. Chewing gum formulations were prepared with encapsulated sweeteners 3A-3Fby methods known in the art. The chewing gum formulations are summarized in Table 5.

Table 4.

| Formula | 3A | 3B | 3C | 3D | 3E | 3F |
|---|---|---|---|---|---|---|
| HPMC | 30 | 30 | 0 | 30 | 30 | 30 |
| Reb A | 35 | 0 | 30 | 52.5 | 35 | 0 |
| Reb D | 35 | 70 | 70 | 0 | 0 | 0 |
| Reb M | 0 | 0 | 0 | 17.5 | 35 | 70 |
| Total | 100.0 | 100.0 | 100.0 | 100.0 | 100.0 | 100.0 |

Table 5.

| FORMULA | G1 | G2 | G3 | G4 | G5 | G6 | G7 | G8 | G9 | G10 |
|---|---|---|---|---|---|---|---|---|---|---|
| sorbitol | 55.76 | 55.76 | 55.85 | 55.76 | 55.85 | 55.85 | 55.85 | 55.76 | 55.76 | 55.76 |
| gum base | 25.72 | 25.72 | 25.72 | 25.72 | 25.72 | 25.72 | 25.72 | 25.72 | 25.72 | 25.72 |
| glycerin | 16.25 | 16.25 | 16.25 | 16.25 | 16.25 | 16.25 | 16.25 | 16.25 | 16.25 | 16.25 |
| lecithin | 0.128 | 0.128 | 0.128 | 0.128 | 0.128 | 0.128 | 0.128 | 0.128 | 0.128 | 0.128 |
| flavor | 1.86 | 1.86 | 1.86 | 1.86 | 1.86 | 1.86 | 1.86 | 1.86 | 1.86 | 1.86 |
| Reb A (neat) | - | - | 0.20 | - | 0.15 | 0.1 | - | - | - | - |
| Reb M (neat) | - | - | - | - | 0.05 | 0.1 | 0.2 | - | - | - |
| 3A | - | 0.2875 | - | - | - | - | - | - | - | - |
| 3B | 0.2875 | - | - | - | - | - | - | - | - | - |
| 3C | - | - | - | 0.2875 | - | - | - | - | - | - |
| 3D | - | - | - | - | - | - | - | 0.2875 | - | - |
| 3E | - | - | - | - | - | - | - | - | 0.2875 | - |
| 3F | - | - | - | - | - | - | - | - | - | 0.2875 |
| Total | 100.0 | 100.0 | 100.0 | 100.0 | 100.0 | 100.0 | 100.0 | 100.0 | 100.0 | 100.0 |

A trained panel with eight participants received each sample for evaluation twice for chewing gum formulation G1-G4. The panel used a 0-15 scale for all measures. Panelists chewed gum for twelve minutes and measured the sensory attributes during the chew period.

The sensory analysis results for sweetness, metallic taste and bitterness are summarized in Figures 3 and 4. HPMC encapsulation decreased bitterness and metallic taste.

For chewing gum formulations G5-G10, a trained panel with six participants received each sample for evaluation twice. The panel used a 0-9 scale for all measures. Panelists chewed gum for twelve minutes and measured the sensory attributes during the chew period.

The trained sensory analysis results for bitterness and sweetness are summarized in Figures 6a-6d and Figures 7a-7d. Blends of HPMC encapsulated Reb-M and Reb-A at a 1:1 ratio gave lower sweetness than encapsulated Reb A alone. Blends of encapsulated Reb M and Reb A at a 1:3 ratio provides lower bitterness and off taste than using encapsulated Reb-A, or encapsulated blends of Reb M and Reb A at a 1:1 ratio.

**Example 4: Sweetener encapsulation and chewing gum formulation**

In this example, a reference chewing gum comprising PVAC encapsulated sweetener compounds are prepared and evaluated. This reference chewing gum comprising PVAC encapsulated sweetener is not part of the invention and is for illustration purposes only.

Sweeteners were prepared by the methods disclosed in Example 1 for comparison with those prepared with PVAC. Sweeteners prepared with PVAC were encapsulated using extrusion methods known to a person of skill in the

art. The composition of the HPMC encapsulated sweeteners 4A-4C are summarized in Table 6 below. The compositions formulated with PVAC are summarized in Table 7. Chewing gum formulations were prepared with various sweeteners by methods known in the art. The chewing gum formulations comprising PVAC encapsulated sweeteners 4D and 4E are summarized in Table 8.

Table 6.

| Formula | 4A | 4B | 4C | 4F | 4G |
|---|---|---|---|---|---|
| Reb A | 85 | 70 | 50 | 80 | 75 |
| HPMC | 15 | 30 | 50 | 0 | 0 |
| Microcrystalline Cellulose | 0 | 0 | 0 | 20 | 25 |
| Total | 100 | 100 | 100 | 100 | 100 |

Table 7.

| Description | 4D† | 4E† |
|---|---|---|
| Reb A | 40 | 40 |
| Low molecular weight PVAC | 60 | - |
| Medium molecular weight PVAC | - | 60 |
| Total | 100 | 100 |
| † = denotes a Reference Example which is not part of the invention | | |

Table 8.

| FORMULA | 7A† | 7B† | 7C | 7D |
|---|---|---|---|---|
| sorbitol | 55.55 | 55.55 | 55.85 | 55.76 |
| gum base | 25.72 | 25.72 | 25.72 | 25.72 |
| glycerin | 16.25 | 16.25 | 16.25 | 16.25 |
| lecithin | 0.128 | 0.128 | 0.128 | 0.128 |
| flavor | 1.86 | 1.86 | 1.86 | 1.86 |
| Reb A (neat) | - | - | 0.2 | - |
| 4B | - | - | - | 0.2875 |
| 4D | 0.5 | - | - | - |
| 4E | - | 0.500 | - | - |
| Total | 100.0 | 100.0 | 100.0 | 100.0 |
| † = denotes a Reference Example which is not part of the invention | | | | |

Each formulation was evaluated for release of Reb A from the chewing gum during a 20 minute chew. Three panelists chewed the gum in sync with a metronome at 60 chew/minutes. The gum cud were collected at 0.5, 1, 3, 6, 9 12, 20 minutes. The Reb A remaining in gum cud was analyzed by high pressure liquid chromatography (HPLC). The percent of release of Reb A was calculated as follows:

$$[\text{(Reb A content before chewing -Reb A content in gum cud)}*100\,] / \text{(Reb A content before chewing)} = \%\ \text{release} \qquad \text{(Formula 1)}$$

Each formulation underwent a sensory evaluation. A trained panel with eight participants received each sample for evaluation twice. The panel used a 0-15 scale for all measurements. Panelists chewed gum for twelve minutes and measured the sensory attributes during the chew period.

The results are summarized in Figure 5. The kinetic release data indicates that a controlled release of Reb A into the saliva can contribute to the reduced bitterness and metallic taste observed. Further, encapsulations using modified celluloses such as HPMC have a lower metallic taste than those encapsulations using PVAc.

Although the presently disclosed subject matter and its advantages have been described in detail, it should be understood that various changes, substitutions and alterations can be made herein without departing from the scope of the appended claims. Moreover, the scope of the present application is not intended to be limited to the particular embodiments of the process, machine, manufacture, composition of matter, means, methods and steps described in the specification.

## Claims

1. A confectionery comprising a sweetener composition, the sweetener composition comprising at least one encapsulated compound wherein the at least one encapsulated compound is selected from the group consisting of rebaudioside A, rebaudioside D, rebaudioside M, and combinations thereof, and wherein the encapsulating material of the at least one encapsulated compound is selected from the group consisting of hydroxyl methyl cellulose, hydroxypropyl methylcellulose (HPMC), microcrystalline cellulose, carboxymethyl cellulose, ethylcellulose, and combinations thereof, wherein the confectionery is a chewing gum or a chewy confection, and wherein the sweetener composition is added to provide an amount from 0.2 to 0.4 wt% of rebaudioside A, rebaudioside D, rebaudioside M and combinations thereof in the chewing gum or chewy confection.

2. The confectionery of claim 1, wherein the at least one encapsulated compound is partially encapsulated.

3. The confectionery of claim 1, wherein the ratio of rebaudioside A to rebaudioside M is from 1: 1 to 3:1.

4. The confectionery of claim 1, wherein the ratio of rebaudioside A to rebaudioside D is from 1: 1 to 3:1.

5. The confectionery of any one of claims 1 to 3, wherein the sweetener composition further comprises a non-nutritive sweetener selected from the group consisting of aspartame, neotame, advantame, sucralose, acesulfame potassium (Acek), sodium saccharin, glycyrrhizin, Neohysperidine Dihydrochalcone (NHDC), Neotame, Lou Han Guo, brazzein, monatin, thaumatin, alitame, saccharin and its salts, cyclamic acid and its salts, monellin, and combinations thereof.

6. The confectionery of claim 1, wherein the ratio of Rebaudioside A to Rebaudioside M is 3: 1.

7. The confectionery of claim 1, wherein the confectionery is a chewing gum, and wherein the sweetener composition is present in the chewing gum in an amount of from 0.25% to 2% w/w.

8. The confectionery of claim 1, wherein the chewing gum or chewy confection contains up to 0.2 wt% rebaudioside A, up to 0.4% rebaudioside M and combinations thereof.

## Patentansprüche

1. Süßware, umfassend eine Süßungsmittelzusammensetzung, wobei die Süßungsmittelzusammensetzung wenigstens eine verkapselte Verbindung umfasst, wobei die wenigstens eine verkapselte Verbindung ausgewählt ist aus der Gruppe bestehend aus Rebaudiosid A, Rebaudiosid D, Rebaudiosid M und Kombinationen davon und wobei das verkapselnde Material der wenigstens einen verkapselten Verbindung ausgewählt ist aus der Gruppe bestehend aus Hydroxymethylcellulose, Hydroxypropylmethylcellulose (HPMC), mikrokristalliner Cellulose, Carboxymethylcellulose, Ethylcellulose und Kombinationen davon, wobei die Süßware ein Kaugummi oder ein Kaukonfekt ist und wobei die Süßungsmittelzusammensetzung zugegeben ist, um eine Menge von 0,2 bis 0,4 Gew.-% Rebaudiosid A, Rebaudiosid D, Rebaudiosid M oder Kombinationen davon in dem Kaugummi oder Kaukonfekt bereitzustellen.

2. Süßware gemäß Anspruch 1, wobei die wenigstens eine verkapselte Verbindung teilverkapselt ist.

3. Süßware gemäß Anspruch 1, wobei das Verhältnis von Rebaudiosid A zu Rebaudiosid M von 1:1 bis 3:1 beträgt.

4. Süßware gemäß Anspruch 1, wobei das Verhältnis von Rebaudiosid A zu Rebaudiosid D von 1:1 bis 3:1 beträgt.

5. Süßware gemäß einem der Ansprüche 1 bis 3, wobei die Süßungsmittelzusammensetzung ferner ein nichtnutritives Süßungsmittel ausgewählt aus der Gruppe bestehend aus Aspartam, Neotam, Advantam, Sucralose, Acesulfam-Kalium (Acek), Natriumsaccharin, Glycyrrhizin, Neohesperidin-Dihydrochalcon (NHDC), Neotam, Lou Han Guo, Brazzein, Monatin, Thaumatin, Alitam, Saccharin und seinen Salzen, Cyclaminsäure und ihren Salzen, Monellin und Kombinationen davon umfasst.

6. Süßware gemäß Anspruch 1, wobei das Verhältnis von Rebaudiosid A zu Rebaudiosid M 3:1 beträgt.

7. Süßware gemäß Anspruch 1, wobei die Süßware ein Kaugummi ist und wobei die Süßungsmittelzusammensetzung in dem Kaugummi in einer Menge von 0,25 % bis 2 % Gew./Gew. vorhanden ist.

8. Süßware gemäß Anspruch 1, wobei der Kaugummi oder das Kaukonfekt bis zu 0,2 Gew.-% Rebaudiosid A, bis zu 0,4 Gew.-% Rebaudiosid M und Kombinationen davon enthält.

## Revendications

1. Confiserie comprenant une composition d'édulcorant, la composition d'édulcorant comprenant au moins un composé encapsulé, dans laquelle l'au moins un composé encapsulé est choisi dans le groupe constitué par le rébaudioside A, le rébaudioside D, le rébaudioside M et des combinaisons correspondantes, et dans laquelle le matériau d'encapsulation de l'au moins un composé encapsulé est choisi dans le groupe constitué par une hydroxyméthylcellulose, une hydroxypropylméthylcellulose (HMPC), une cellulose microcristalline, une carboxyméthylcellulose, une éthylcellulose et des combinaisons correspondantes, la confiserie étant un chewing-gum ou une confiserie à mâcher, et la composition d'édulcorant étant ajoutée pour fournir une quantité de 0,2 à 0,4 % en poids de rébaudioside A, de rébaudioside D, de rébaudioside M et des combinaisons correspondantes dans le chewing-gum ou la confiserie à mâcher.

2. Confiserie selon la revendication 1, dans laquelle l'au moins un composé encapsulé est partiellement encapsulé.

3. Confiserie selon la revendication 1, dans laquelle le rapport de rébaudioside A sur rébaudioside M est de 1:1 à 3:1.

4. Confiserie selon la revendication 1, dans laquelle le rapport de rébaudioside A sur rébaudioside D est de 1:1 à 3:1.

5. Confiserie selon l'une quelconque des revendications 1 à 3, dans laquelle la composition d'édulcorant comprend en outre un édulcorant non nutritif choisi dans le groupe constitué par l'aspartame, le néotame, l'advantame, le sucralose, l'acésulfame potassium (Acek), la saccharine sodique, la glycyrrhizine, la dihydrochalcone de néohyspéridine (NHDC), le néotame, le Lou Han Guo, la brazzéine, la monatine, la thaumatine, l'alitame, la saccharine et ses sels, l'acide cyclamique et ses sels, la monelline, et des combinaisons correspondantes.

6. Confiserie selon la revendication 1, dans laquelle le rapport de rébaudioside A sur rébaudioside M est de 3:1.

7. Confiserie selon la revendication 1, dans laquelle la confiserie est un chewing-gum et dans laquelle la composition d'édulcorant est présente dans le chewing-gum en quantité allant de 0,25 % à 2 % p/p.

8. Confiserie selon la revendication 1, dans laquelle le chewing-gum ou la confiserie à mâcher contient jusqu'à 0,2 % en poids de rébaudioside A, jusqu'à 0,4 % en poids de rébaudioside M et des combinaisons correspondantes.

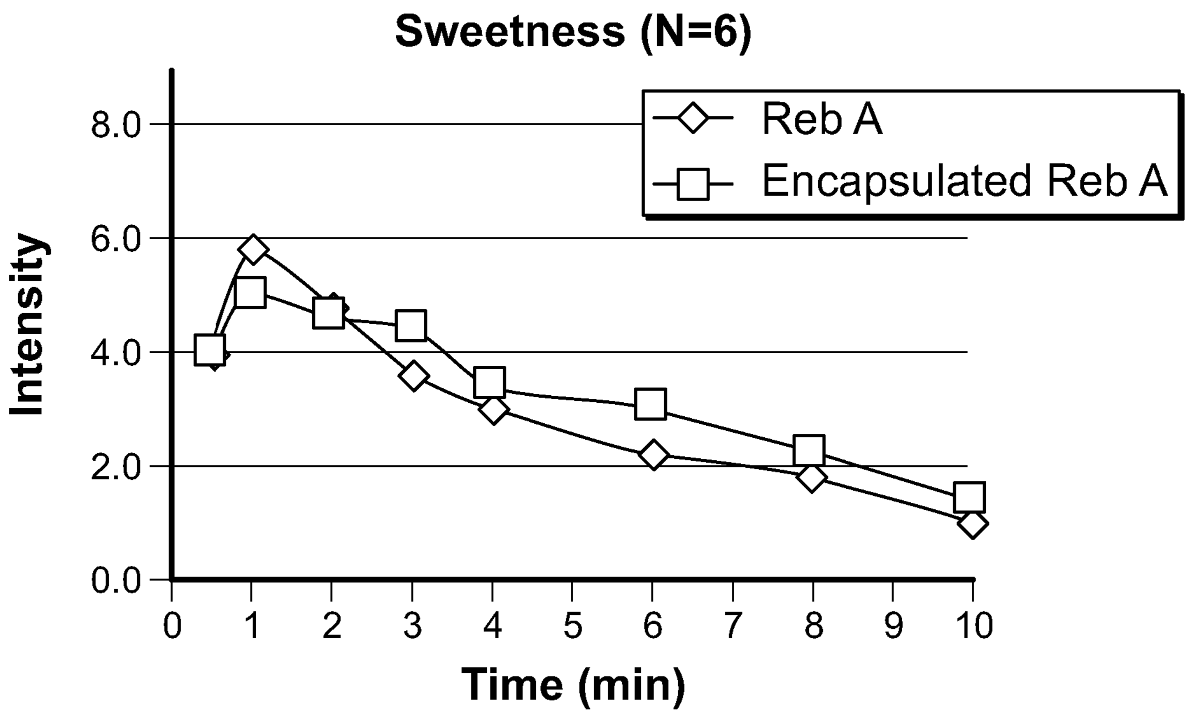
Sweetness (N=6)
Reb A
Encapsulated Reb A
Intensity
8.0
6.0
4.0
2.0
0.0
0
1
2
3
4
5
6
7
8
9
10
Time (min)

FIG. 1a

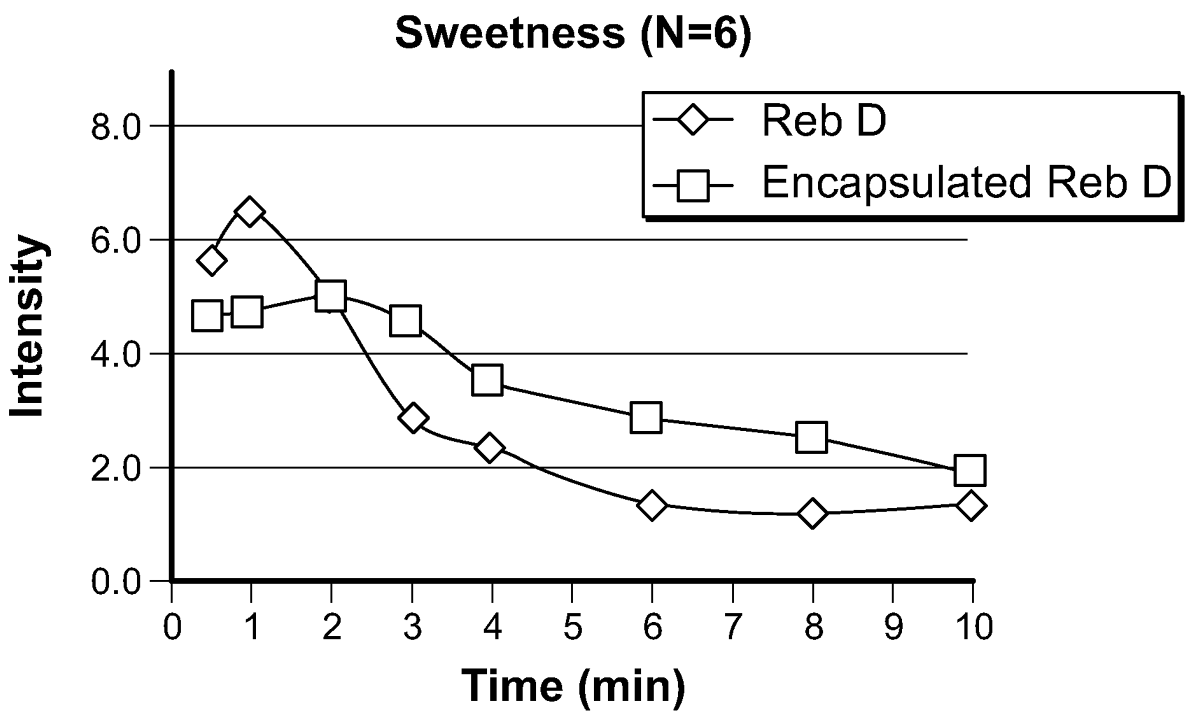
Sweetness (N=6)
Reb D
Encapsulated Reb D
Intensity
8.0
6.0
4.0
2.0
0.0
0
1
2
3
4
5
6
7
8
9
10
Time (min)

FIG. 1b

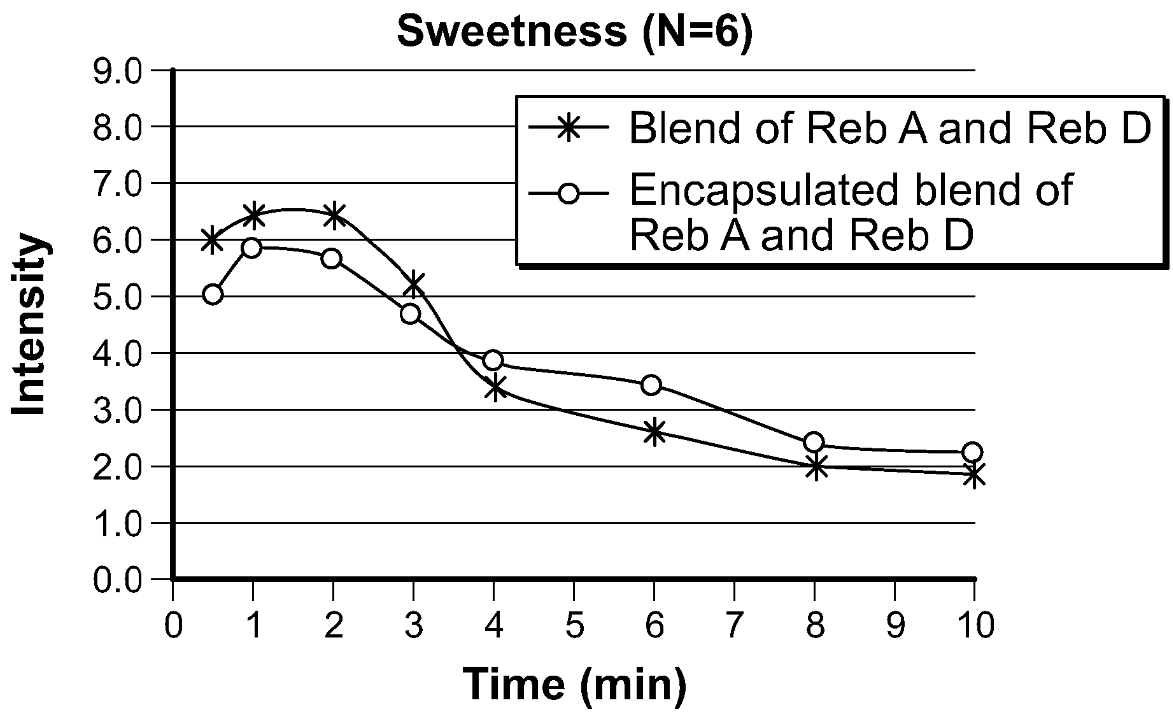
Sweetness (N=6)
Blend of Reb A and Reb D
Encapsulated blend of Reb A and Reb D
Intensity
9.0
8.0
7.0
6.0
5.0
4.0
3.0
2.0
1.0
0.0
0
1
2
3
4
5
6
7
8
9
10
Time (min)

FIG. 1c

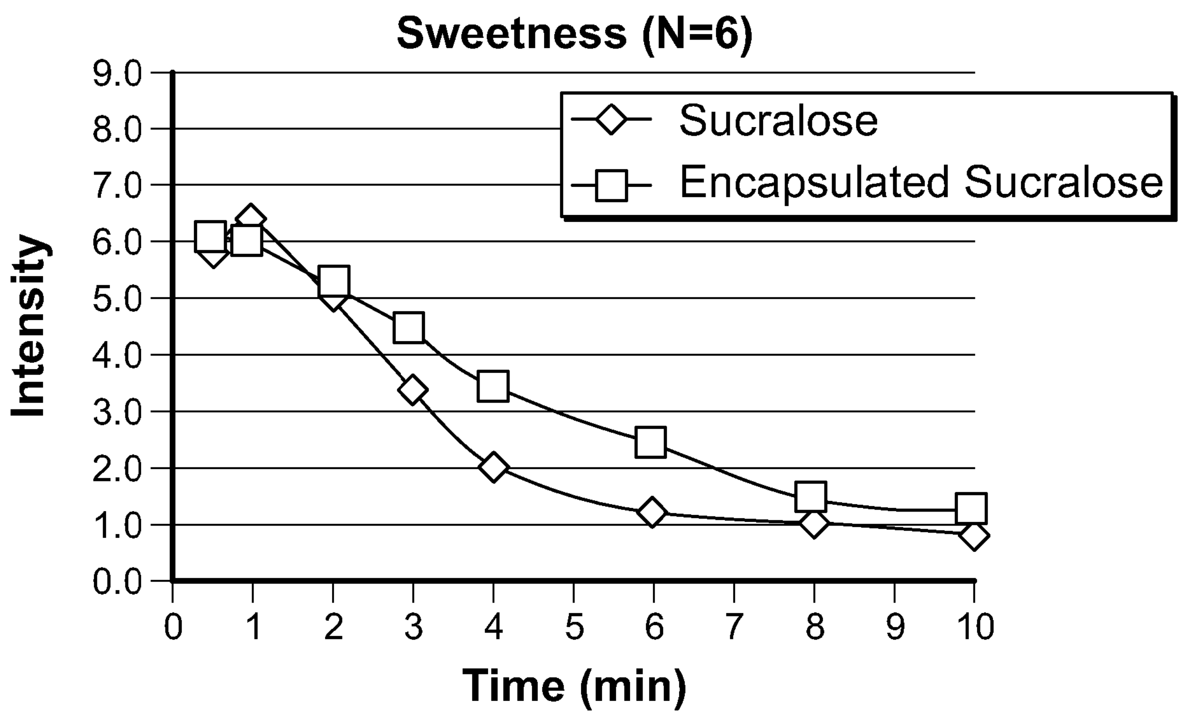
Sweetness (N=6)
Sucralose
Encapsulated Sucralose
Intensity
9.0
8.0
7.0
6.0
5.0
4.0
3.0
2.0
1.0
0.0
0
1
2
3
4
5
6
7
8
9
10
Time (min)

FIG. 1d

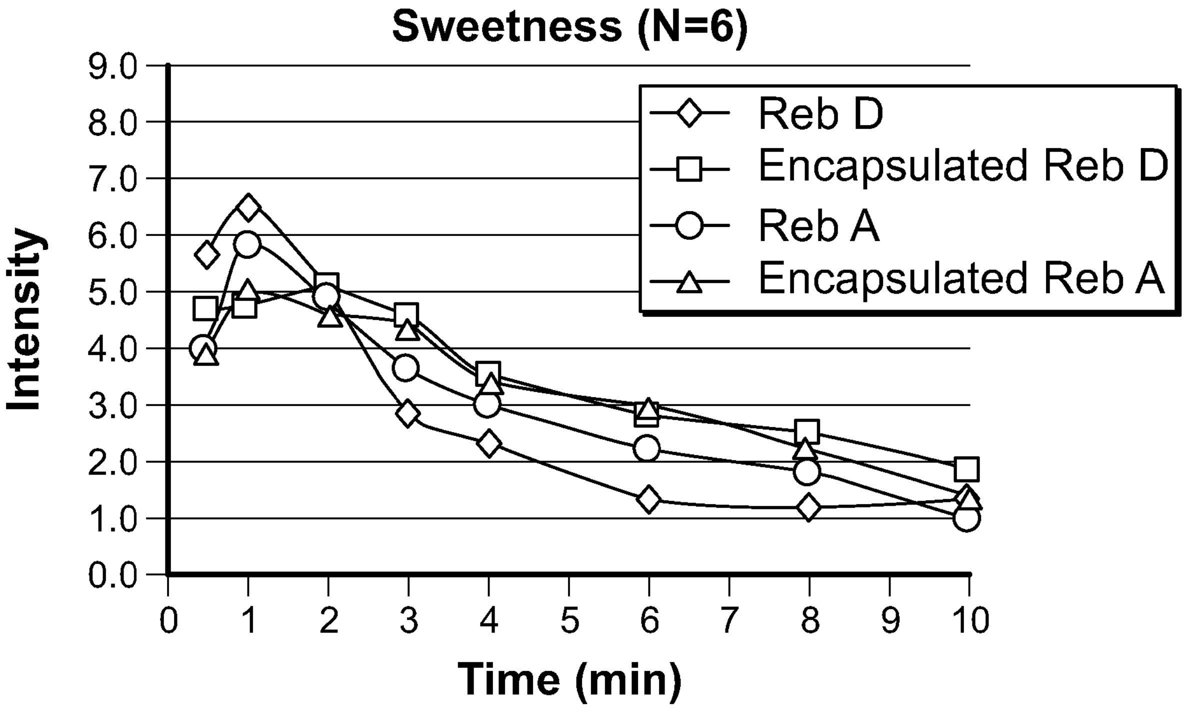

Sweetness (N=6)
Intensity
Time (min)
9.0
8.0
7.0
6.0
5.0
4.0
3.0
2.0
1.0
0.0
0
1
2
3
4
5
6
7
8
9
10
Reb D
Encapsulated Reb D
Reb A
Encapsulated Reb A


FIG. 1e

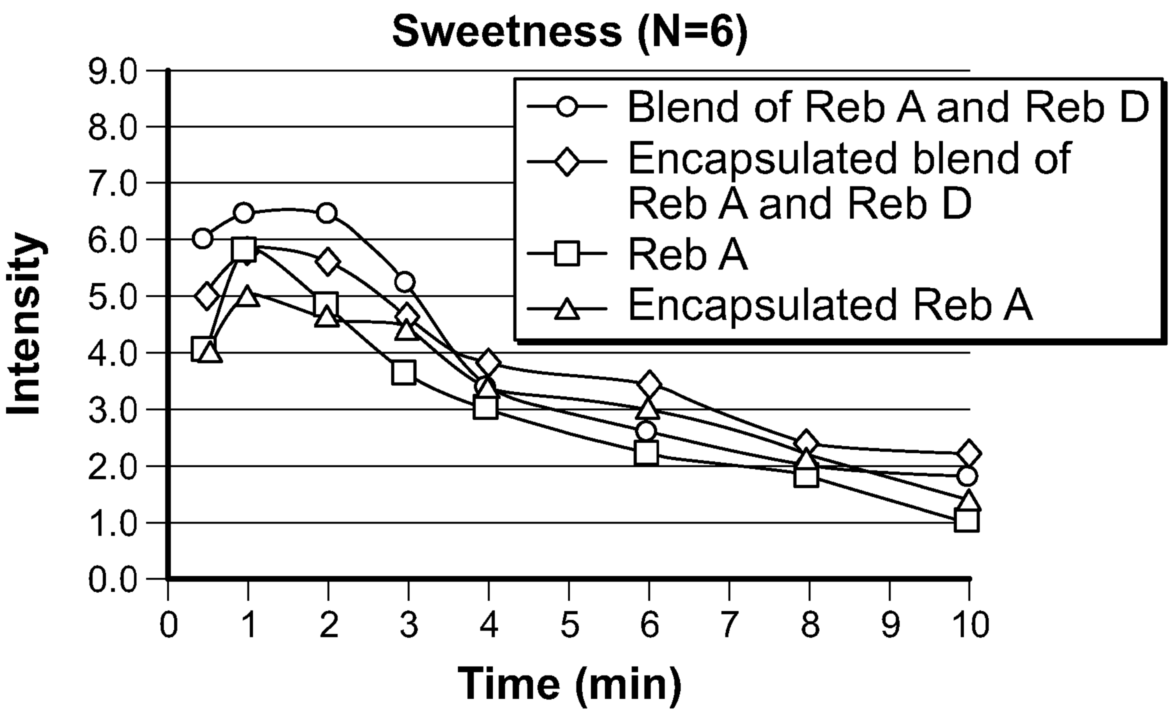

Sweetness (N=6)
Intensity
Time (min)
9.0
8.0
7.0
6.0
5.0
4.0
3.0
2.0
1.0
0.0
0
1
2
3
4
5
6
7
8
9
10
Blend of Reb A and Reb D
Encapsulated blend of Reb A and Reb D
Reb A
Encapsulated Reb A


FIG. 1f

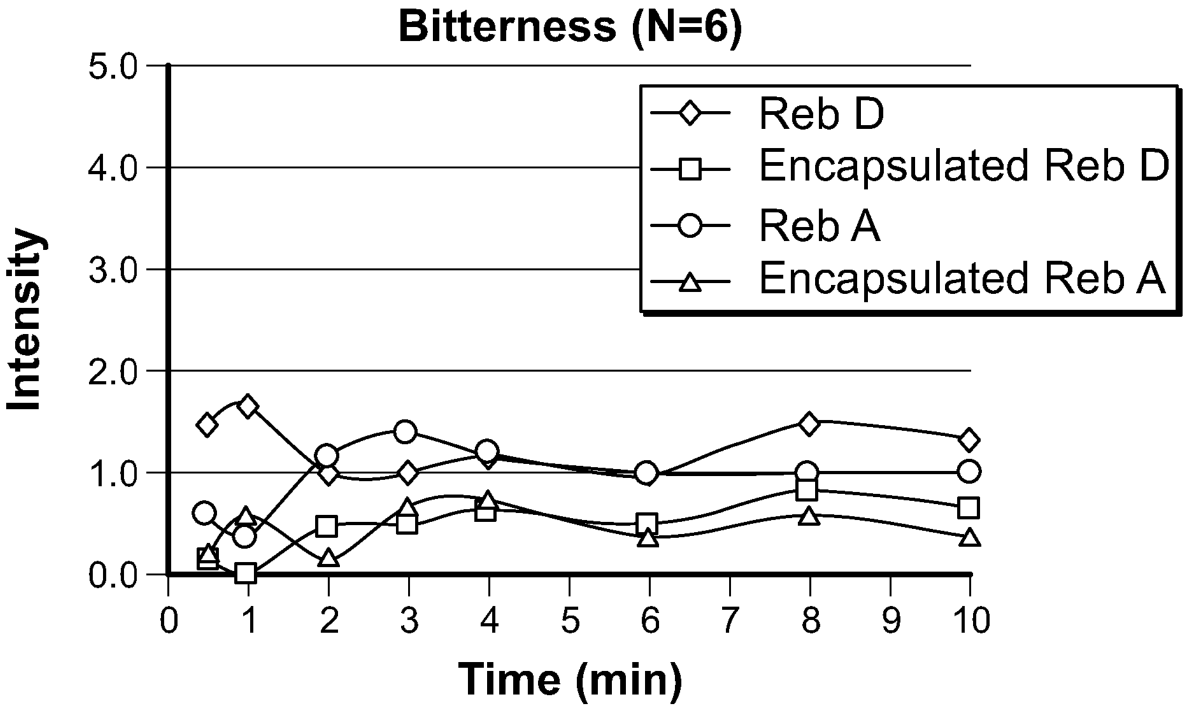

Bitterness (N=6)
Reb D
Encapsulated Reb D
Reb A
Encapsulated Reb A
Intensity
5.0
4.0
3.0
2.0
1.0
0.0
0
1
2
3
4
5
6
7
8
9
10
Time (min)


FIG. 2a

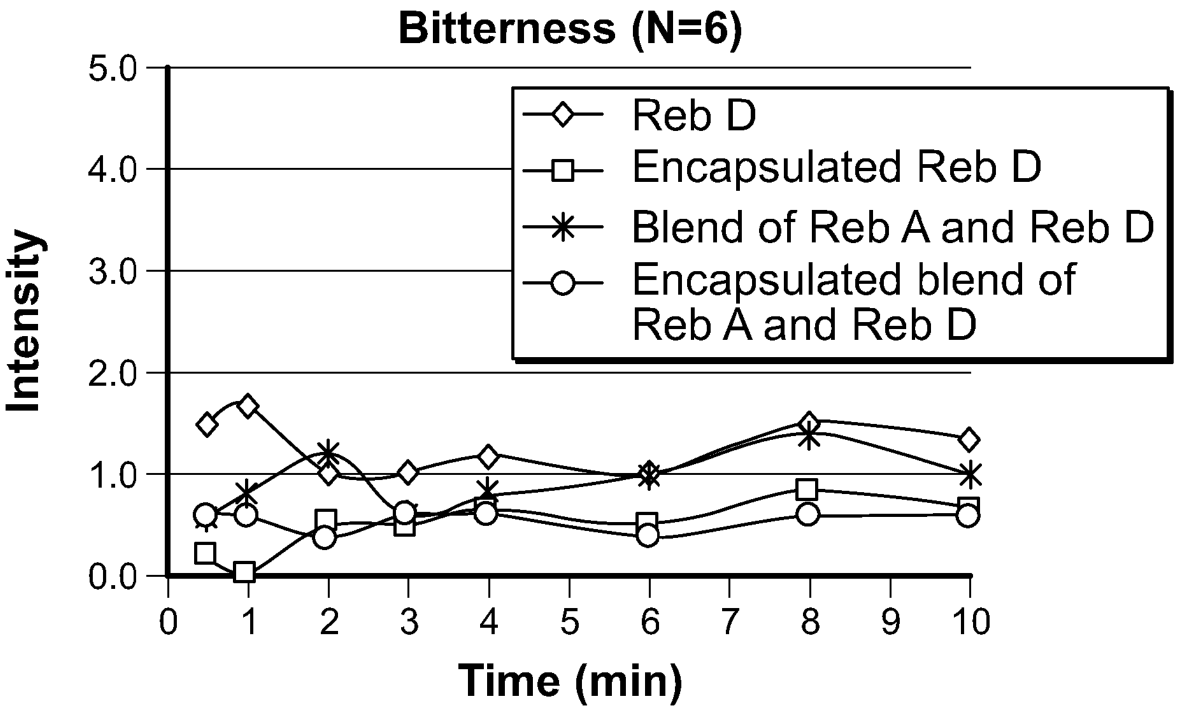

Bitterness (N=6)
Reb D
Encapsulated Reb D
Blend of Reb A and Reb D
Encapsulated blend of Reb A and Reb D
Intensity
5.0
4.0
3.0
2.0
1.0
0.0
0
1
2
3
4
5
6
7
8
9
10
Time (min)


FIG. 2b

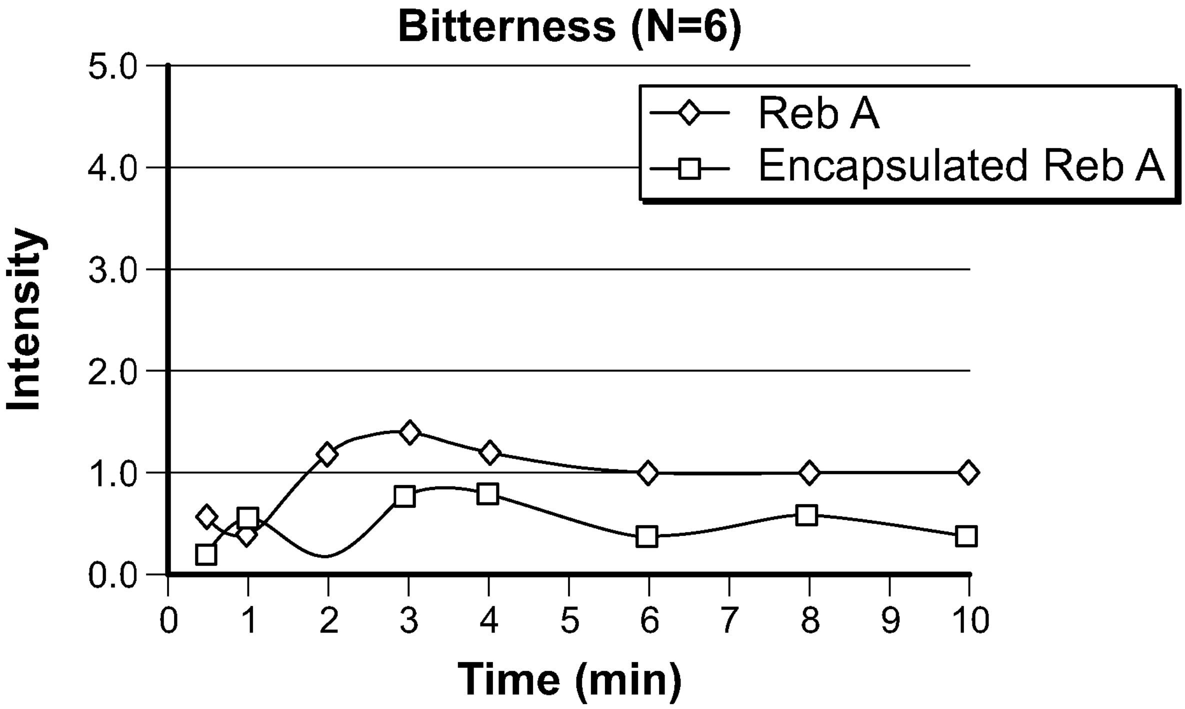
Bitterness (N=6)
Reb A
Encapsulated Reb A
Intensity
5.0
4.0
3.0
2.0
1.0
0.0
0
1
2
3
4
5
6
7
8
9
10
Time (min)

FIG. 2c

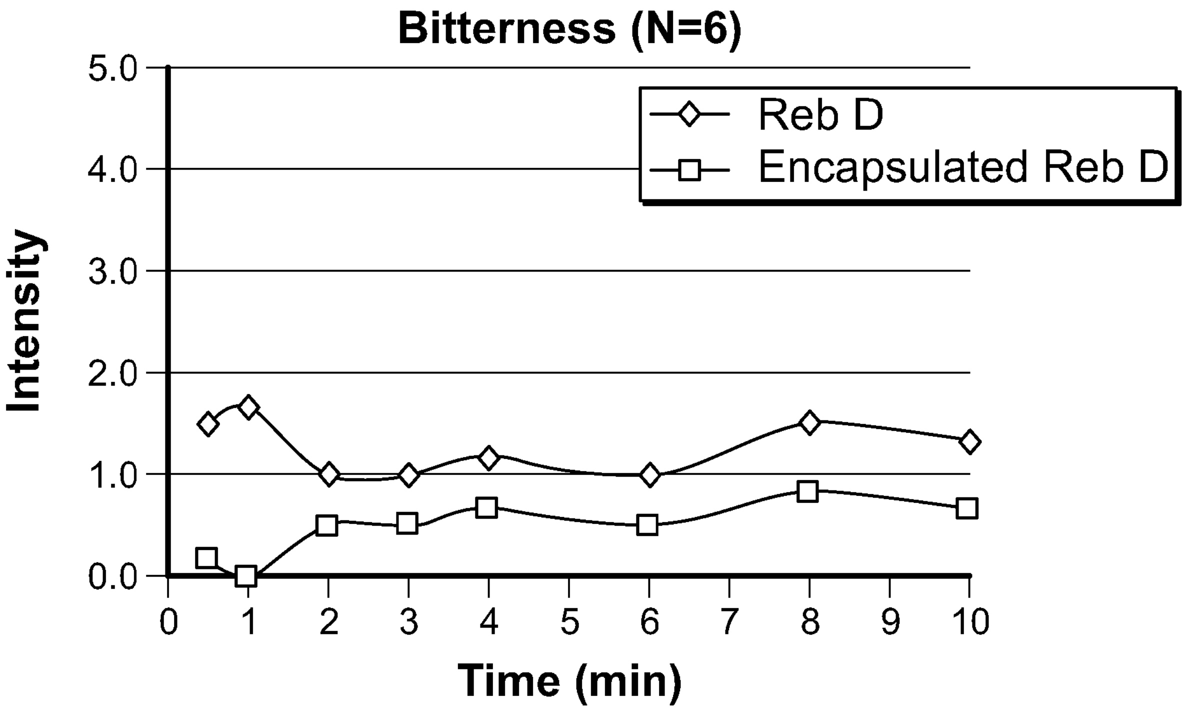
Bitterness (N=6)
Reb D
Encapsulated Reb D
Intensity
5.0
4.0
3.0
2.0
1.0
0.0
0
1
2
3
4
5
6
7
8
9
10
Time (min)

FIG. 2d

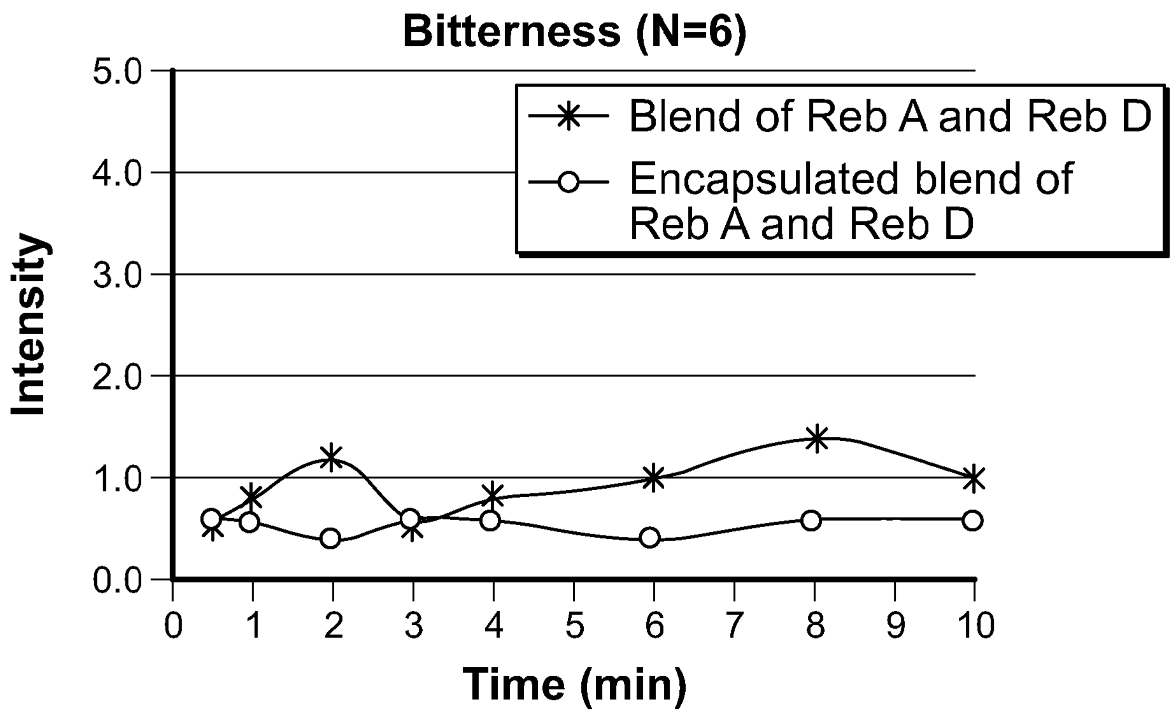

Bitterness (N=6)
Blend of Reb A and Reb D
Encapsulated blend of Reb A and Reb D
Intensity
5.0
4.0
3.0
2.0
1.0
0.0
0
1
2
3
4
5
6
7
8
9
10
Time (min)


FIG. 2e

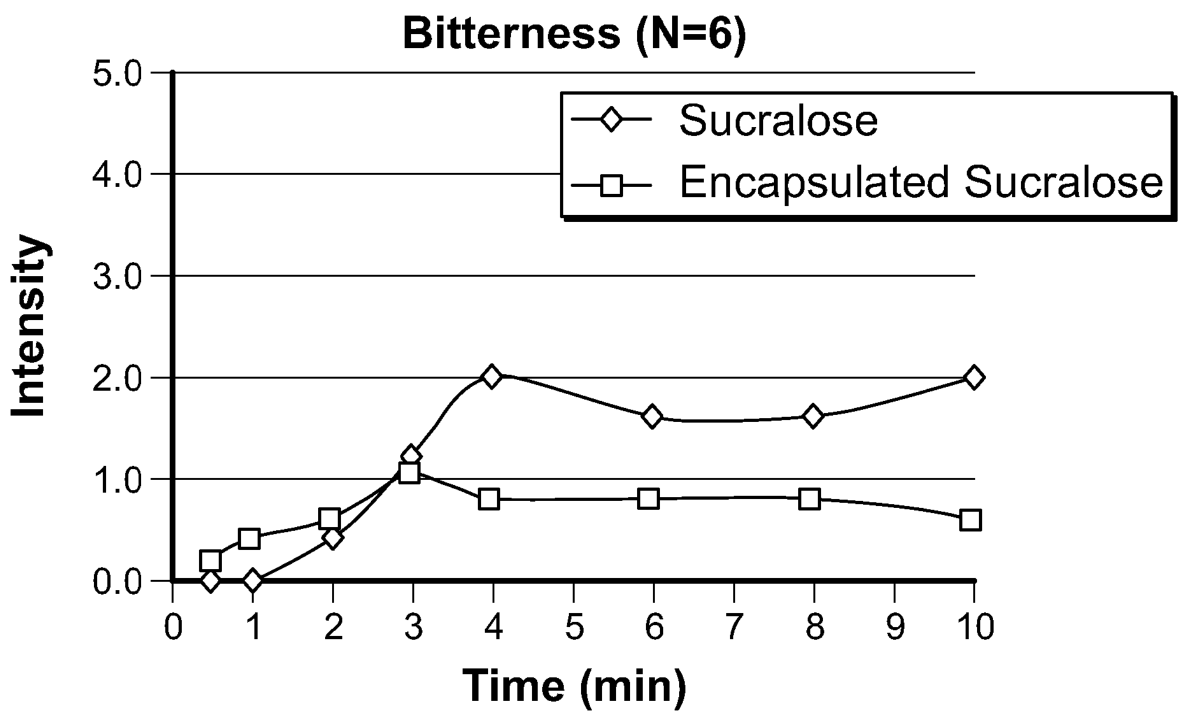

Bitterness (N=6)
Sucralose
Encapsulated Sucralose
Intensity
5.0
4.0
3.0
2.0
1.0
0.0
0
1
2
3
4
5
6
7
8
9
10
Time (min)


FIG. 2f

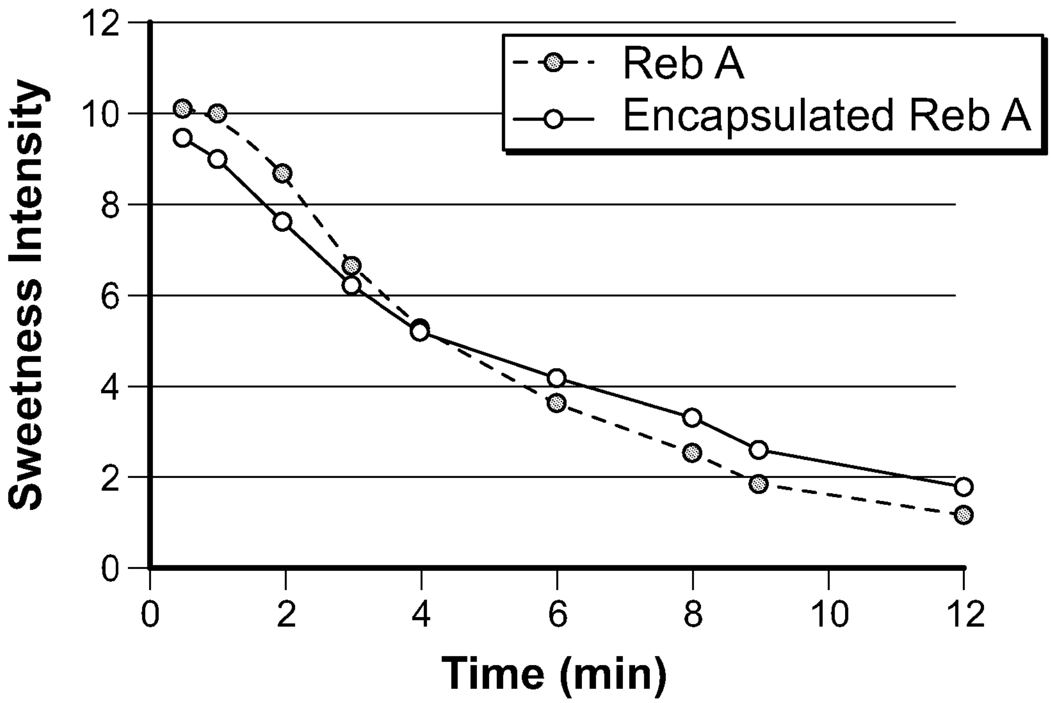
Sweetness Intensity
Time (min)
Reb A
Encapsulated Reb A
0
2
4
6
8
10
12

FIG. 3a

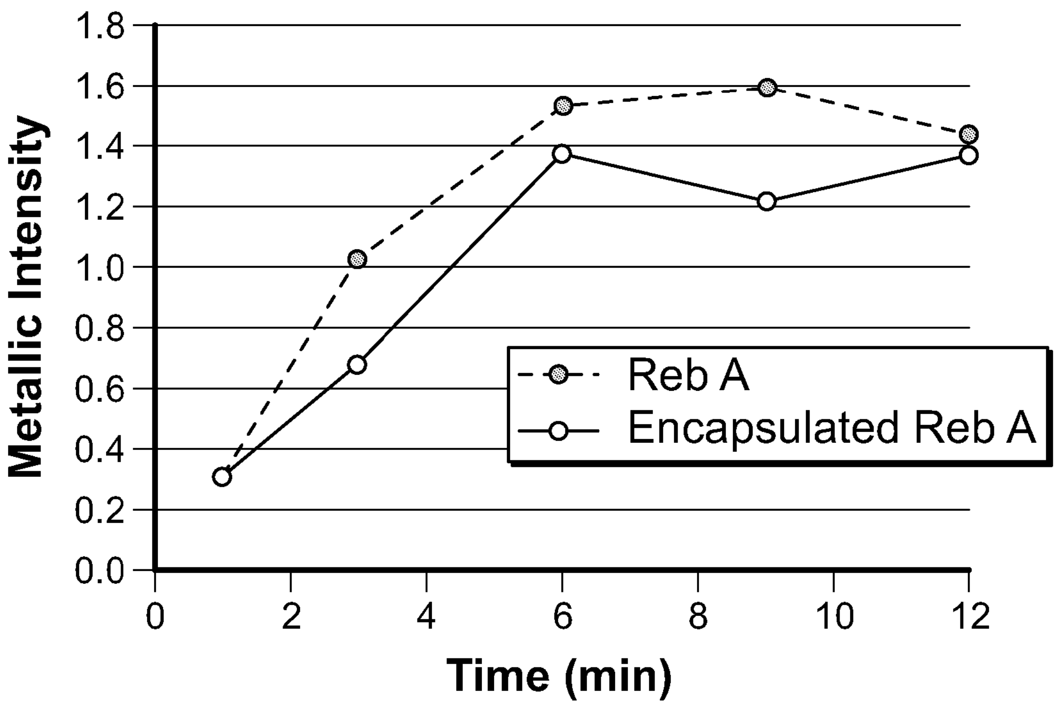
Metallic Intensity
Time (min)
Reb A
Encapsulated Reb A
0.0
0.2
0.4
0.6
0.8
1.0
1.2
1.4
1.6
1.8
0
2
4
6
8
10
12

FIG. 3b

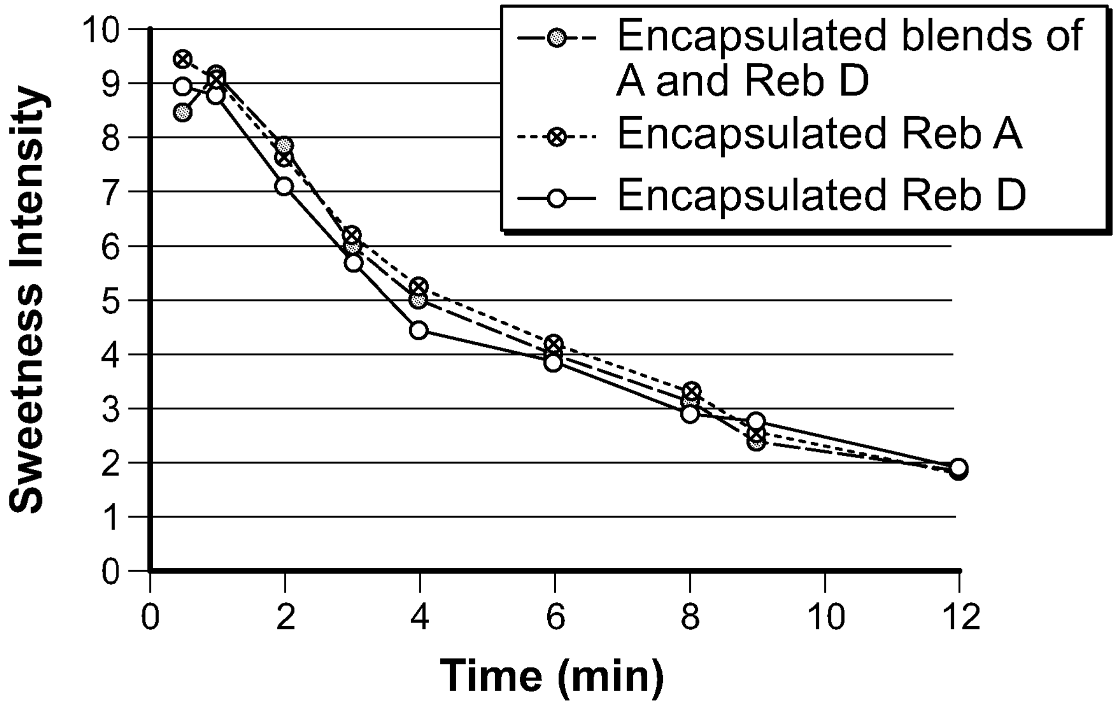

Sweetness Intensity
10
9
8
7
6
5
4
3
2
1
0
0
2
4
6
8
10
12
Time (min)
Encapsulated blends of A and Reb D
Encapsulated Reb A
Encapsulated Reb D


FIG. 4a

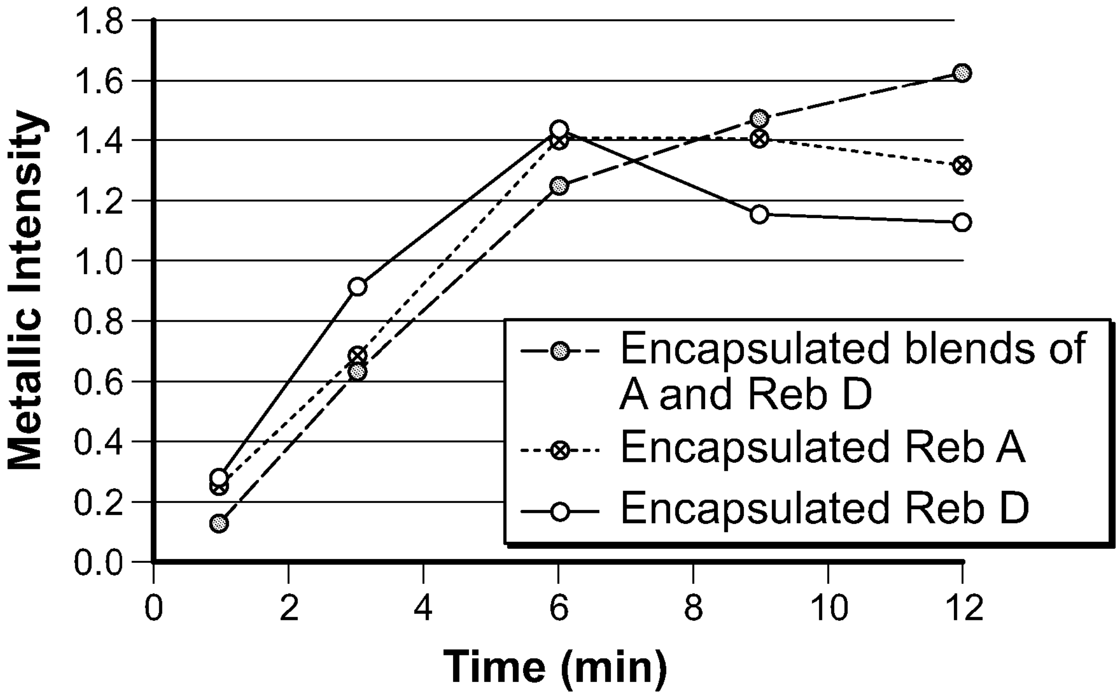

Metallic Intensity
1.8
1.6
1.4
1.2
1.0
0.8
0.6
0.4
0.2
0.0
0
2
4
6
8
10
12
Time (min)
Encapsulated blends of A and Reb D
Encapsulated Reb A
Encapsulated Reb D


FIG. 4b

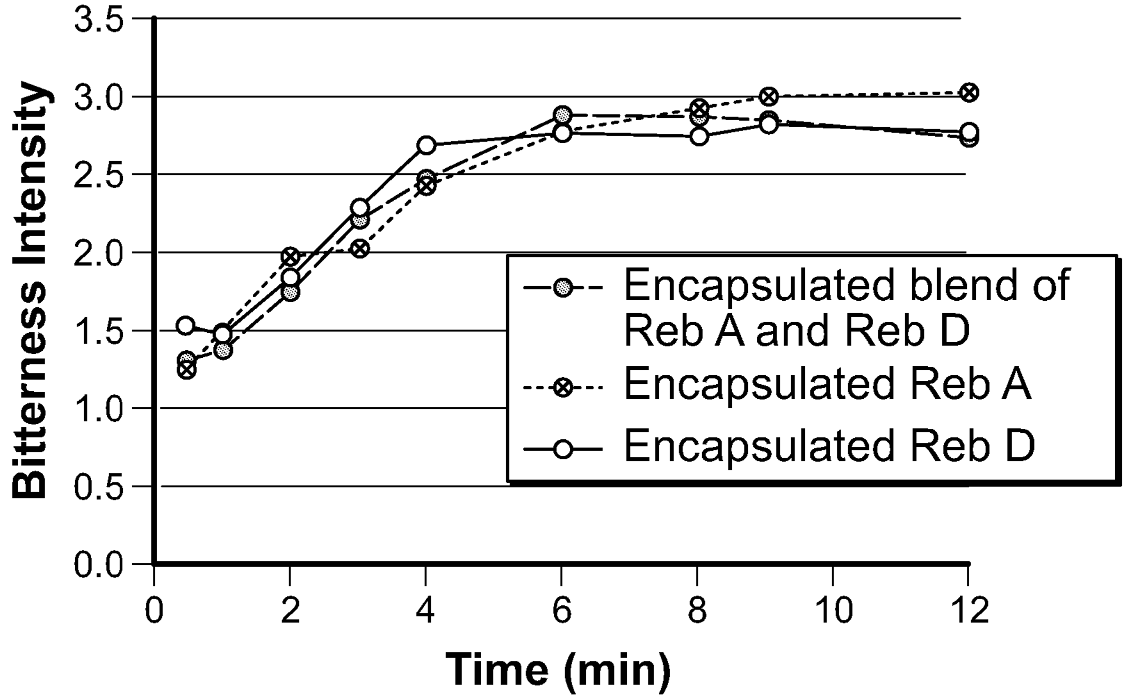
Bitterness Intensity
3.5
3.0
2.5
2.0
1.5
1.0
0.5
0.0
0
2
4
6
8
10
12
Time (min)
Encapsulated blend of Reb A and Reb D
Encapsulated Reb A
Encapsulated Reb D

FIG. 4c

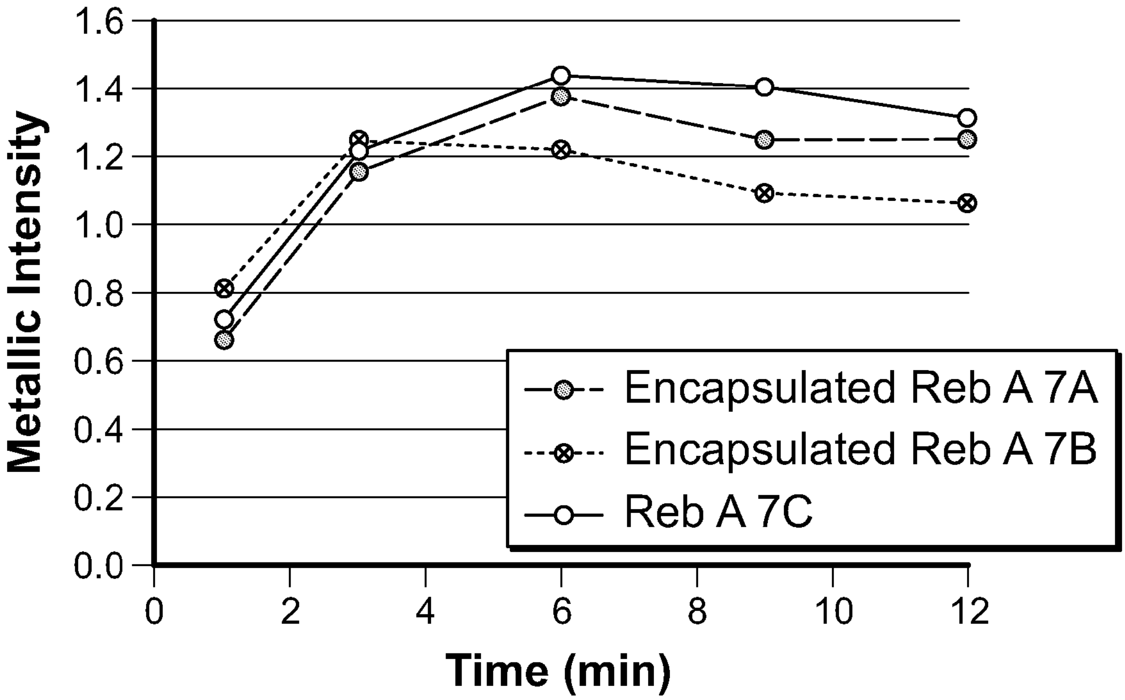
Metallic Intensity
1.6
1.4
1.2
1.0
0.8
0.6
0.4
0.2
0.0
0
2
4
6
8
10
12
Time (min)
Encapsulated Reb A 7A
Encapsulated Reb A 7B
Reb A 7C

FIG. 5

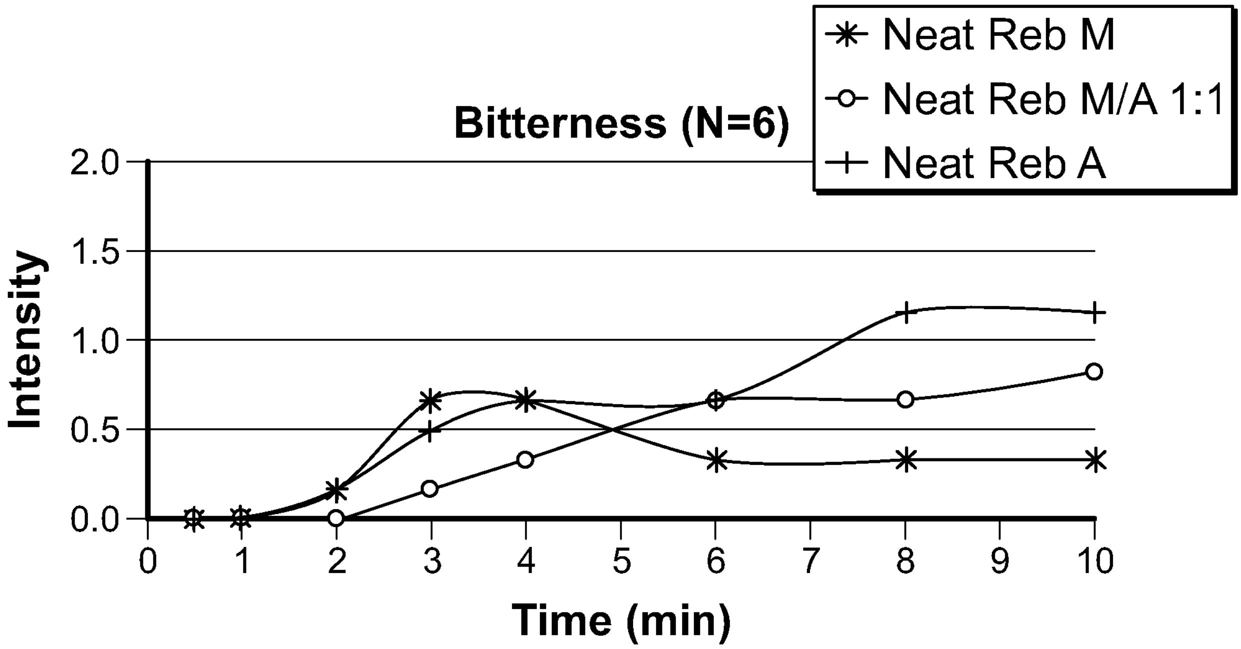
Neat Reb M
Neat Reb M/A 1:1
Neat Reb A
Bitterness (N=6)
Intensity
2.0
1.5
1.0
0.5
0.0
0
1
2
3
4
5
6
7
8
9
10
Time (min)

FIG. 6a

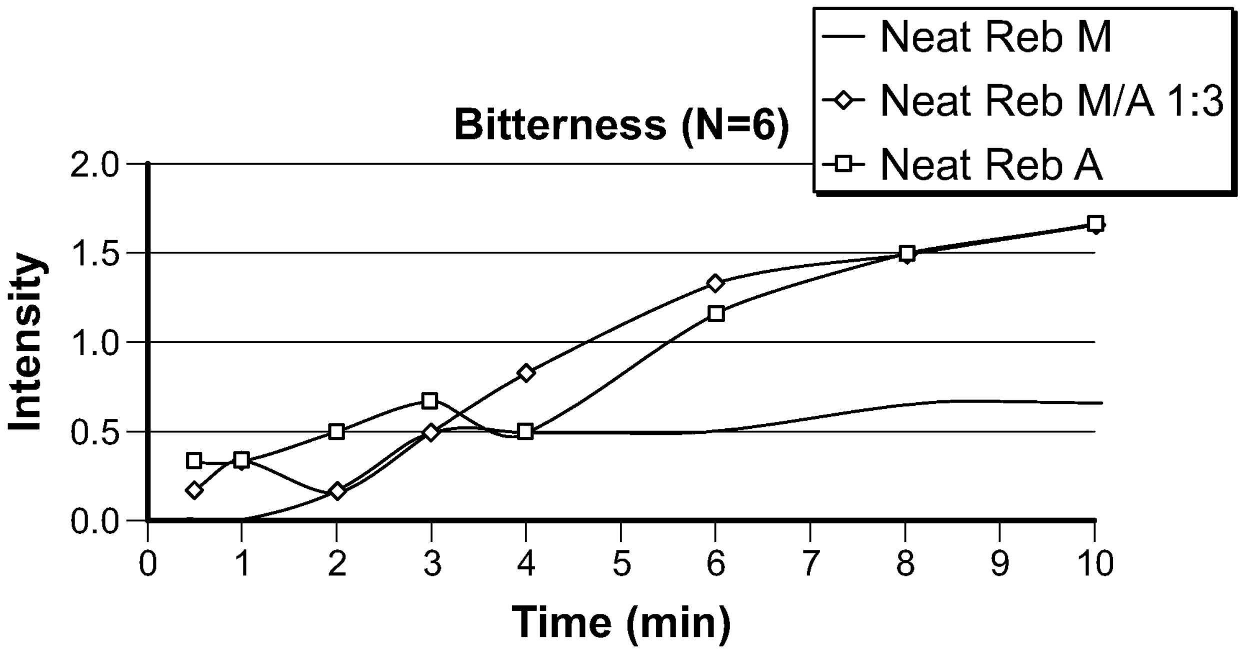
Neat Reb M
Neat Reb M/A 1:3
Neat Reb A
Bitterness (N=6)
Intensity
2.0
1.5
1.0
0.5
0.0
0
1
2
3
4
5
6
7
8
9
10
Time (min)

FIG. 6b

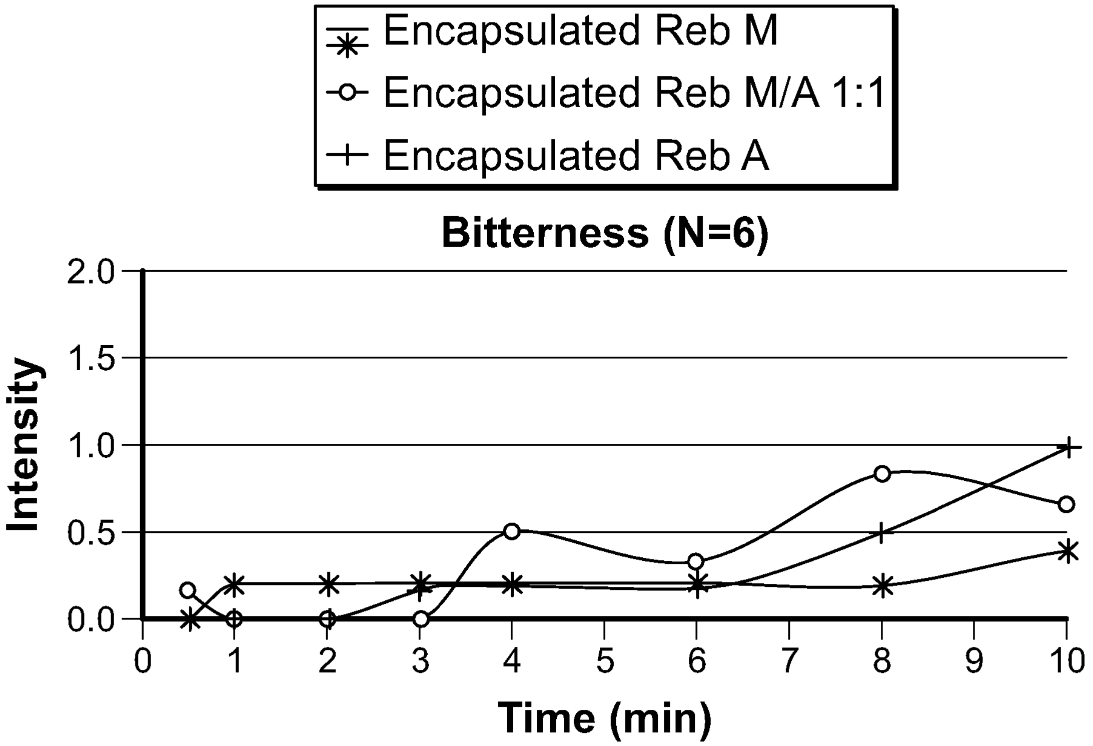
Encapsulated Reb M
Encapsulated Reb M/A 1:1
Encapsulated Reb A
Bitterness (N=6)
Intensity
2.0
1.5
1.0
0.5
0.0
0 1 2 3 4 5 6 7 8 9 10
Time (min)

FIG. 6c

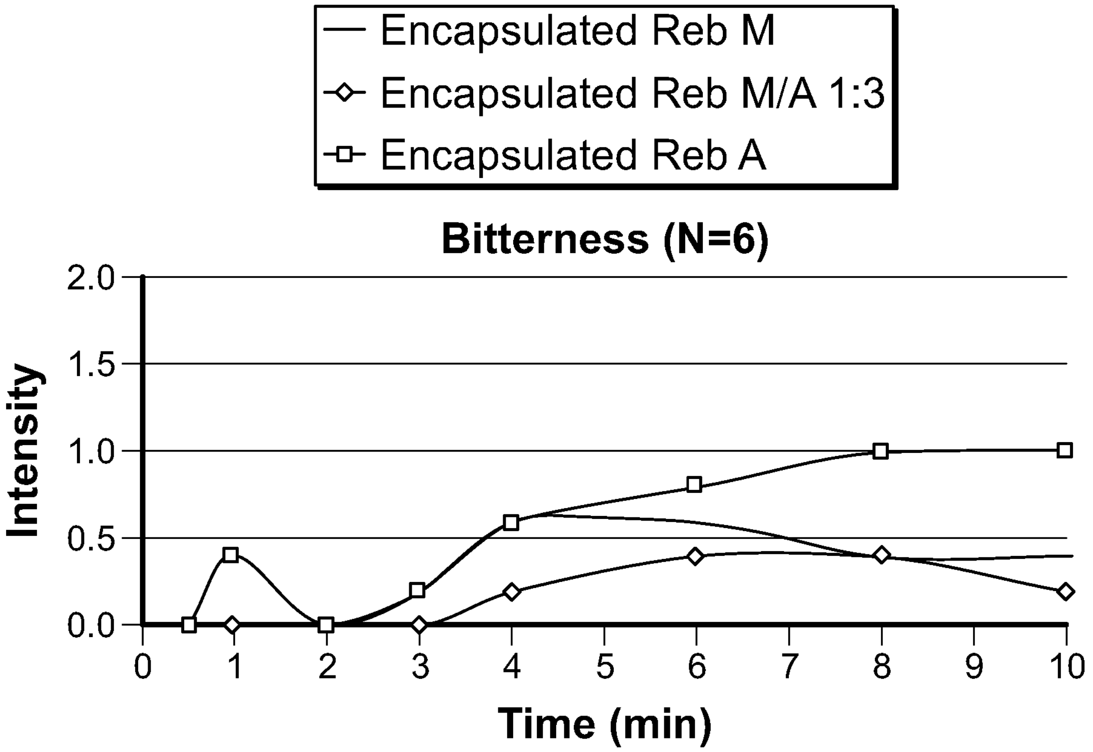
Encapsulated Reb M
Encapsulated Reb M/A 1:3
Encapsulated Reb A
Bitterness (N=6)
Intensity
2.0
1.5
1.0
0.5
0.0
0 1 2 3 4 5 6 7 8 9 10
Time (min)

FIG. 6d

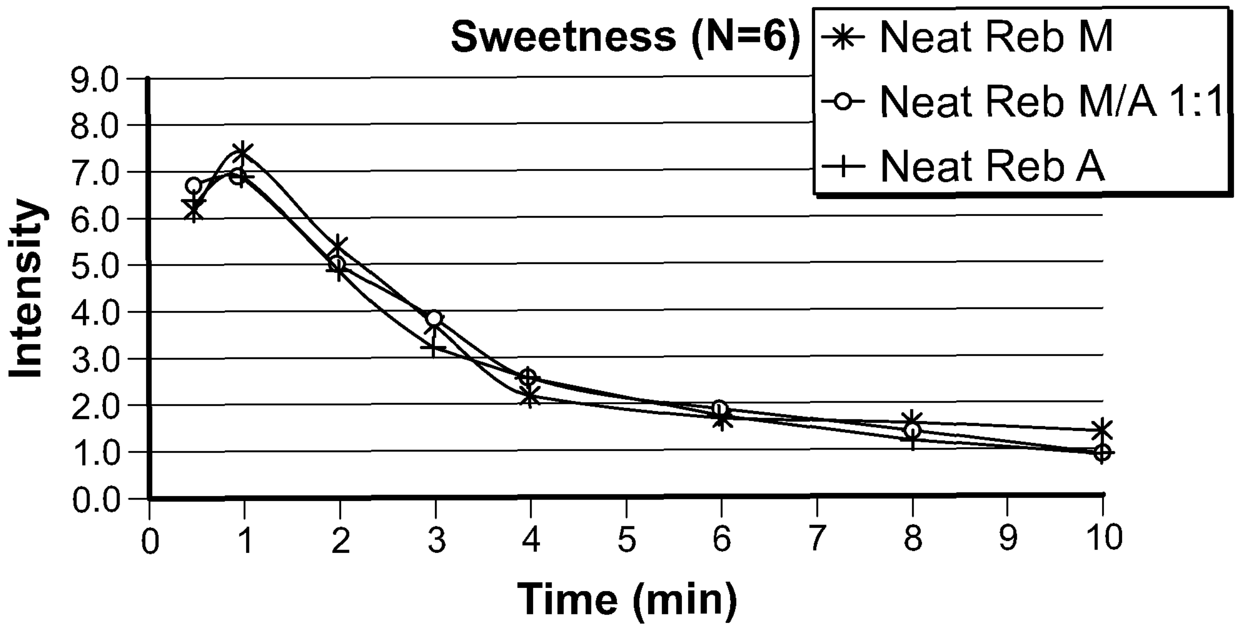
Sweetness (N=6)
Neat Reb M
Neat Reb M/A 1:1
Neat Reb A
Intensity
9.0
8.0
7.0
6.0
5.0
4.0
3.0
2.0
1.0
0.0
0
1
2
3
4
5
6
7
8
9
10
Time (min)

FIG. 7a

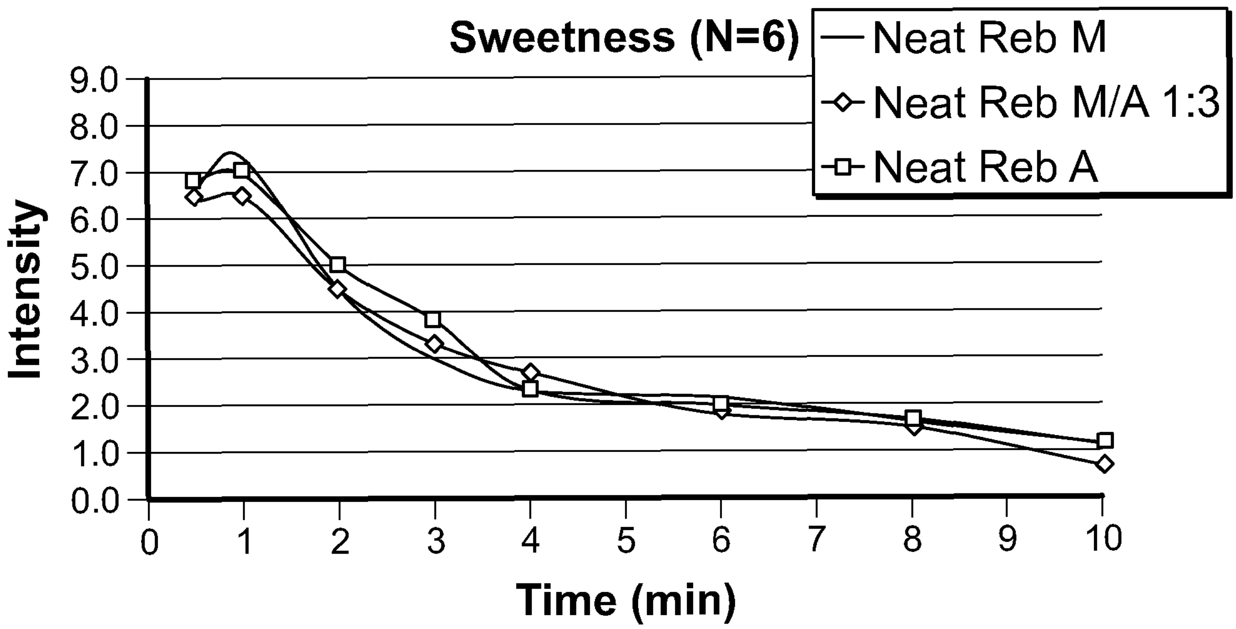
Sweetness (N=6)
Neat Reb M
Neat Reb M/A 1:3
Neat Reb A
Intensity
9.0
8.0
7.0
6.0
5.0
4.0
3.0
2.0
1.0
0.0
0
1
2
3
4
5
6
7
8
9
10
Time (min)

FIG. 7b

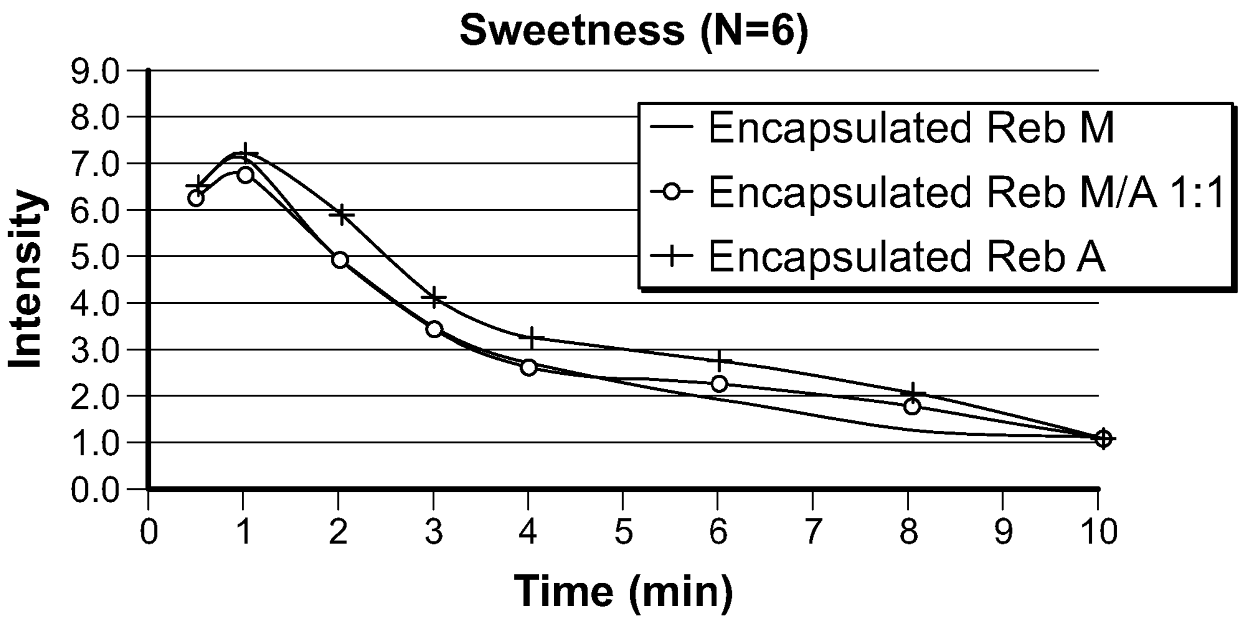
Sweetness (N=6)
Intensity
9.0
8.0
7.0
6.0
5.0
4.0
3.0
2.0
1.0
0.0
0
1
2
3
4
5
6
7
8
9
10
Time (min)
Encapsulated Reb M
Encapsulated Reb M/A 1:1
Encapsulated Reb A

FIG. 7c

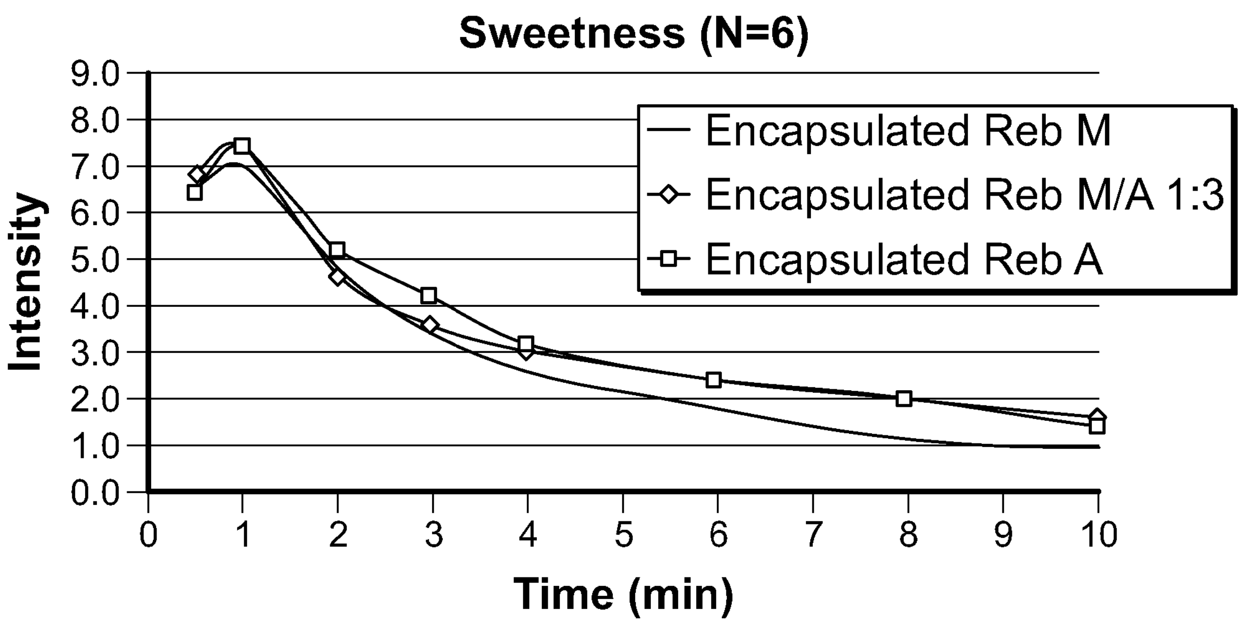
Sweetness (N=6)
Intensity
9.0
8.0
7.0
6.0
5.0
4.0
3.0
2.0
1.0
0.0
0
1
2
3
4
5
6
7
8
9
10
Time (min)
Encapsulated Reb M
Encapsulated Reb M/A 1:3
Encapsulated Reb A

FIG. 7d

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 9103147 A2
- WO 2015023928 A1
- US 2015086695 A
- US 9029426 B
- US 8299224 B
- US 8703224 B
- US 20130156885 A
- US 20050202118 A


### Non-patent literature cited in the description


- **INDRA PRAKESH et al.** Development of Next Generation Stevia Sweetener: Rebaudioside M. *Foods,* 2014, vol. 3 (1), 162-175
- **I. PRAKASH et al.** *C. Foods,* 2014, vol. 3 (163), 162-175